# EUROPÄISCHE PATENTSCHRIFT

(11) **EP 1 935 202 B1**
(45) Veröffentlichungstag und Bekanntmachung des Hinweises auf die Patenterteilung: **16.03.2016**
(21) Anmeldenummer: 06805851.0
(22) Anmeldetag: 25.09.2006
(51) Int. Cl.: H04W 8/26

(54) **ENTSPERREN VON MOBILFUNKKARTEN**
UNBLOCKING OF MOBILE TELEPHONE CARDS
DEBLOCAGE DE CARTES DE TELEPHONIE MOBILE

(30) Priorität: 26.09.2005 DE 102005045887
(43) Veröffentlichungstag der Anmeldung: 25.06.2008
(73) Patentinhaber: Giesecke & Devrient GmbH, 81677 München (DE)
(72) Erfinder: ALTSCHÄFL, Hermann, 81927 München (DE); RANKL, Wolfgang, 81825 München (DE); RENNER, Sandra, 85716 Unterschleissheim (DE)
(86) Internationale Anmeldenummer: PCT/EP2006/009292
(87) Internationale Veröffentlichungsnummer: WO 2007/036341

(56) Entgegenhaltungen:
- EP-A- 1 429 229
- DE-A1- 10 238 699
- DE-U1- 20 100 604
- FR-A1- 2 763 773
- US-A- 5 812 953
- US-B1- 6 611 913

## Beschreibung

Die Erfindung betrifft ein Verfahren zum Entsperren einer gesperrten Mobilfunkkarte mittels einer Serviceeinrichtung sowie eine dafür geeignete Mobilfunkkarte und Serviceeinrichtung.

Mobilfunkkarten, die in ein mobiles Telekommunikationsendgerät eingesetzt sind, insbesondere in einem Mobilfunktelefon, stellen dem Benutzer einen mobilen Zugang zu einem Mobilfunknetz bereit. Solche Mobilfunkkarten sind gegen unbefugte Benutzung in der Regel durch eine benutzerspezifische Zugangskennung geschützt, die bei jedem Einbuchen der Mobilfunkkarte in das Mobilfunknetz von dem Benutzer in das Telekommunikationsendgerät eingegeben wird. Zur Überprüfung der Zugangsberechtigung wird die eingegebene Zugangskennung mit einer auf der Mobilfunkkarten abgespeicherten Referenzzugangskennung verglichen.

Aufgrund des zunehmenden Einsatzes derartiger Zugangskennungen bei den verschiedensten zugangsbeschränkten Systemen, wie z. B. Bankkarten oder sonstigen Chipkarten mit benutzerspezifischer Information, besteht für den Benutzer die Schwierigkeit, dass die individuelle Zugangskennung seiner Mobilfunkkarte, die sogenannte PIN ("Personal Identification Number"), verlegt oder vergessen werden kann.

Um Missbrauch auszuschließen, wird eine Zugangskennung nach zumeist dreimaliger Eingebe einer falschen Zugangskennung ungültig, so dass der Benutzer die Mobilfunkkarte nicht mehr ohne weiteres entsperren kann. Zum Entsperren einer derart gesperrten Mobilfunkkarte ist es dann üblich, eine zweite Kennung in Form eines Entsperrschlüssels zur Verfügung zu stellen, mit welchem der Benutzer seine gesperrte Mobilfunkkarte wieder entsperren kann. Im Mobilfunkbereich wird dieser Entsperrschlüssel meist als PUK, "PIN Unblocking Key", bezeichnet.

Der Entsperrschlüssel kann dem Benutzer einer Mobilfunkkarte von dem Kartenherausgeber prinzipiell zu zwei verschiedenen Zeitpunkten mitgeteilt werden: Einerseits präventiv vor einem Entsperrfall, beispielsweise postalisch bei Aushändigung der Mobilfunkkarte zusammen mit der Zugangskennung, und andererseits bei einem Entsperrfall in der Regel telefonisch. Hierbei besteht die Schwierigkeit, dass ein Benutzer, dessen Mobilfunkkarte gesperrt ist, an seinem aktuellen Standort möglicherweise keinen Zugriff auf den Entsperrschlüssel hat, da er diesen beispielsweise in seiner Wohnung aufbewahrt oder der Entsperrschlüssel dorthin geschickt wird.

FR 2 763 773 A1 veröffentlicht die Entsperrung einer Mobilfunkkarte wobei der Benutzer einen neuen PIN Kode generieren kann.

Der Erfindung liegt die Aufgabe zugrunde, eine einfache Möglichkeit zum Entsperren einer gesperrten Mobilfunkkarte bereitzustellen.

Diese Aufgabe wird erfindungsgemäß durch ein Verfahren, eine Mobilfunkkarte und eine Serviceeinrichtung mit den Merkmalen der unabhängigen Ansprüche gelöst. In davon abhängigen Ansprüchen sind vorteilhafte Ausgestaltungen und Weiterbildungen der Erfindung angegeben.

Das Entsperren einer mittels einer Zugangskennung gesperrten Mobilfunkkarte - sei es, dass die Zugangskennung ungültig ist oder sie dem Benutzer lediglich nicht vorliegt - wird durchgeführt, indem der Benutzer der Mobilfunkkarte einen Kontakt mit einer hierfür vorgesehenen Serviceeinrichtung herstellt. Nach dem Entgegennehmen der Kontaktaufnahme des Benutzers durch die Serviceeinrichtung wird eine Authentisierung des Benutzers durchgeführt. Nach einer erfolgreichen Authentisierung wird auf der Mobilfunkkarte schließlich durch die Serviceeinrichtung automatisch ein Zugang für den Benutzer eingerichtet.

Der Vorteil der Erfindung liegt darin, dass ein Benutzer eine gesperrte Mobilfunkkarte ohne Verwendung weiterer, möglicherweise schwer zu merkender und/ oder augenblicklich nicht vorliegender Zugangscodes oder Sicherheitsschlüssel entsperren kann, indem er sich lediglich bei einer hierfür vorgesehenen Serviceeinrichtung authentisiert und die Serviceeinrichtung veranlasst, die Mobilfunkkarte ohne besonderes Zutun des Besitzers automatisch zu entsperren. Dieses Verfahren bietet dem Benutzer einer gesperrten Mobilfunkkarte eine maximale Sicherheit bei gleichzeitig minimalem Aufwand.

Die Serviceeinrichtung kann von einem Kartenherausgeber und/oder einem Mobilfunknetzbetreiber betrieben werden, oder von einem von dem Kartenherausgeber und/oder Mobilfunknetzbetreiber als vertrauenswürdig eingestuften unabhängigen Dritten. Das Entsperren einer Mobilfunkkarte ist somit nicht nur auf unmittelbare Einrichtungen des Kartenherausgebers und/oder Netzbetreibers beschränkt, sondern kann prinzipiell von jedem beliebigen Dritten durchgeführt werden, der hierzu autorisiert und technisch befähigt ist. Als Serviceeinrichtungen kommen somit einerseits Verkaufs- und Dienstleistungsterminals, Filialen, Geschäfte, oder Verkaufsstellen in Frage, die der Benutzer zur Entsperrung der Mobilfunkkarte persönlich aufsuchen kann. Derartige Serviceeinrichtungen sind mit einer Kartenzugriffseinrichtung ausgestattet, über die zum Authentisieren des Benutzers und/oder zum Entsperren der Mobilfunkkarte auf die gesperrte Mobilfunkkarte zugegriffen werden kann. Andererseits sind auch Serviceeinrichtungen möglich, die lediglich fernmündlich oder mittels weiterer Telekommunikationsmittel zu kontaktieren sind, wie z.B. Callcenter, Notrufeinrichtungen und dergleichen. Solche Serviceeinrichtungen können über ein mobiles Telekommunikationsendgerät des Benutzers auf die Mobilfunkkarte zugreifen.

Falls die Serviceeinrichtung persönlich oder telefonisch kontaktiert wird, kann sich der Benutzer mündlich über nur ihm bekannte persönliche Authentisierungsdaten oder -kennwörter authentisieren, während in dem Fall, dass die Serviceeinrichtung ein Terminal oder eine sonstige automatisierte Einrichtung ist, entsprechende Authentisierungsdaten über eine hierfür vorgesehene Vorrichtung der Serviceeinrichtung eingegeben werden, z. B. ein Tastenfeld oder ein Mikrophon. In jedem Fall werden die Authentisierungsdaten des Benutzers mit der Serviceeinrichtung vorliegenden Referenzdaten verglichen. Stimmen Authentisierungsdaten und Referenzdaten überein, gilt der Benutzer als berechtigt und die Mobilfunkkarte wird anschließend von der Serviceeinrichtung entweder über eine spezielle Kartenzugriffseinrichtung der Serviceeinrichtung oder ein mobiles Telekommunikationsendgerät des Benutzers automatisch entsperrt.

Falls die Serviceeinrichtung von einem Kartenherausgeber/Netzbetreiber betrieben wird, entsprechen die Authentisierungsdaten typischerweise denjenigen persönlichen Daten, die der Benutzer beim Erwerb der Mobilfunkkarte oder bei der Unterzeichung eines Mobilfunkvertrags ohnehin bereits hinterlegt hat. Falls die Serviceeinrichtung von einem vertrauenswürdigen Dritten betrieben wird, der die dem Kartenherausgeber/Netzbetreiber vorliegenden persönlichen Daten des Benutzers nicht kennt, werden als Authentisierungsdaten zur Authentisierung geeignete Daten verwendet, die der Benutzer dem Dritten zuvor bereits mitgeteilt hat, beispielsweise im Rahmen der Inanspruchnahme einer Dienstleistung des Dritten oder zu einem beliebigen anderen Zweck. Falls der Dritte beispielsweise eine kontoführende Bank oder ein Kreditkarteninstitut ist, kann die erfindungsgemäße Serviceeinrichtung eine Bankfiliale oder ein Bankterminal sein und die Authentisierungsdaten entsprechen z.B. den Kontodaten oder den Authentisierungsdaten für das Bankkonto des Benutzers.

Beim Schritt des Authentisierens des Benutzers von einer Serviceeinrichtung eines Dritten kann der Dritte zwar den Benutzer anhand der ihm vorliegenden Daten authentisieren, eine Zugriffsberechtigung des Benutzers, auf die von ihm als zu entsperrend präsentierte Mobilfunkkarte ist daraus jedoch nicht zwingend ableitbar. Zu diesem Zweck wird bei der Authentisierung des Benutzers durch den Dritten eine Prüfung einer Zugriffsberechtigung des Benutzers durch einen Kartenherausgeber/Mobilfunknetzbetreiber veranlasst, indem über eine geeignete Kommunikationsverbindung eine entsprechende Anfrage an den Kartenherausgeber/Mobilfunknetzbetreiber gerichtet wird. Dazu wird dem Kartenherausgeber/Mobilfunknetzbetreiber vorzugsweise die Identität des Benutzers und evtl. über eine Kartenzugriffseinrichtung des Dritten ermittelte geeignete Daten der Mobilfunkkarte übertragen. Erst nach einer erfolgreichen Prüfung der Zugriffsberechtigung des Benutzers durch den Kartenherausgeber/Mobilfunknetzbetreiber wird die Mobilfunkkarte entsperrt. Dazu kann der Kartenherausgeber/Mobilfunknetzbetreiber entweder eine entsprechende Bestätigung an den Dritten zurücksenden, um ihn zu veranlassen, einen Zugang auf der Mobilfunkkarte einzurichten, oder es wird von dem Kartenherausgeber/Mobilfunknetzbetreiber per Fernkonfiguration über eine Kartenzugriffseinrichtung des Dritten oder ein Telekommunikationsendgerät des Benutzers ein Zugang direkt eingerichtet.

Der eigentliche Entsperrschritt kann auf vielfältige Weise realisiert werden. Falls die Zugangskennung noch gültig ist, genügt es, dem Benutzer die ihm nicht vorliegende Zugangskennung mitzuteilen. Falls der Kartenherausgeber/Netzbetreiber die Zugangskennungen von Mobilfunkkarten protokolliert, kann diese bei telefonisch/ mündlicher Kontaktaufnahme mit einer Serviceeinrichtung des Kartenherausgebers/Netzbetreibers darin bestehen, dass dem Benutzer die gültige Zugangskennung mündlich mitgeteilt wird oder auf sein Telekommunikationsendgerät übertragen und dort angezeigt wird, z.B. per Kurznachricht. An einem Serviceterminal kann die Zugangskennung von einer Anzeigeeinrichtung des Terminals angezeigt werden. Bei den Fällen eines automatisierten Mitteilens einer gültigen Zugangskennung kann entweder eine entsprechende Anweisung an die Kartenzugriffseinrichtung übertragen werden, die Zugangskennung aus der Mobilfunkkarte auszulesen und dem Benutzer mitzuteilen, oder, falls die Zugangskennung dem Kartenherausgeber/Mobilfunknetzbetreiber vorliegt, kann diese direkt an eine Ausgabeeinrichtung eines Serviceterminals oder Telekommunikationsendgeräts übertragen werden.

Ebenso ist es möglich, dass eine neue Zugangskennung auf der Mobilfunkkarte eingerichtet wird, beispielsweise wenn die Zugangskennung aufgrund mehrfacher Fehleingabe ungültig ist. Eine neue Zugangskennung kann dann beispielsweise von der Serviceeinrichtung bereitgestellt und über eine Kartenzugriffseinrichtung auf der Mobilfunkkarte hinterlegt werden. Auch kann der Benutzer in das automatische Verfahren derart involviert werden, dass er aufgefordert wird, eine neue Zugangskennung über ein entsprechendes Tastenfeld einer Kartenzugriffseinrichtung oder eines Telekommunikationsendgeräts einzugeben. Ebenso ist es möglich, dass eine neue Zugangskennung von der Mobilfunkkarte oder der Serviceeinrichtung erzeugt und auf der Mobilfunkkarte hinterlegt und aktiviert wird. In jedem Falle wird beim Einrichten des Zugangs ein Fehlbedienungszähler der Mobilfunkkarte initialisiert.

Bei verschiedenen der oben beschriebenen Ausführungsalternativen wird die Entsperrung der Mobilfunkkarte von dem Kartenherausgeber/ Mobilfunknetzbetreiber durch Einrichten eines Zugangs für den Benutzer per Fernkonfiguration über eine Kartenzugriffseinrichtung der Serviceeinrichtung oder ein Telekommunikationsendgerät des Benutzers realisiert, beispielsweise indem eine neue Zugangskennung von der Serviceeinrichtung an die Kartenzugriffseinrichtung bzw. das Telekommunikationsendgerät und weiter an die Mobilfunkkarte übertragen wird. Dies ist beispielsweise dann der Fall, wenn eine persönlich aufgesuchte Serviceeinrichtung eines Kartenherausgebers/Mobilfunknetzbetreibers oder eines vertrauenswürdigen Dritten die Entsperrung durch eine zentrale Stelle (des Kartenherausgebers/Mobilfunknetzbetreibers) veranlasst, oder der Benutzer den Kartenherausgeber/Mobilfunknetzbetreiber fernmündlich kontaktiert.

Diese Entsperrung per Fernkonfiguration wird vorzugsweise über eine Luftschnittstelle (OTA-Schnittstelle; "over-the-air") der Kartenzugriffseinrichtung bzw. des Telekommunikationsendgeräts vorgenommen, indem die Serviceeinrichtung oder eine anderweitige mit der Entsperrung betraute zentrale Stelle eine Entsperranweisung über die Luftschnittstelle an die Mobilfunkkarte sendet, welche die Entsperranweisung umsetzt indem eine Entsperrfunktion der Mobilfunkkarte aktiviert wird, die schließlich den Zugang einrichtet. Über die Luftschnittstelle übertragene Daten werden aus Sicherheitsgründen vorzugsweise verschlüsselt übertragen.

Dazu umfasst eine Mobilfunkkarte neben einer Steuereinrichtung und einer Kommunikationsschnittstelle zur Kommunikation mit der Kartenzugriffseinrichtung bzw. dem Telekommunikationsendgerät weiterhin die vorgenannte, von der Serviceeinrichtung zumindest mittelbar über die Kartenzugriffseinrichtung oder das Telekommunikationsendgerät aktivierbare Entsperrfunktion, die das automatische Einrichten eines Zugangs für den Benutzer vornimmt. Die Entsperrfunktion kann als Teil der Steuereinrichtung der Mobilfunkkarte oder als separate Komponente ausgestaltet sein, wird jedoch in jedem Falle von der Steuereinrichtung aktiviert.

Der Anstoß zur Aktivierung der Entsperrfunktion durch die Steuereinrichtung der Mobilfunkkarte kommt von einem über die Schnittstelle der Mobilfunkkarte empfangenen Signal der Kartenzugriffseinrichtung oder des Telekommunikationsendgeräts. Dieses Signal kann seinerseits entweder durch eine Entsperranweisung veranlasst werden, die der Serviceeinrichtung bzw. dem Telekommunikationsendgerät über eine Luftschnittstelle zugeht, oder kann eine manuelle Eingabe über ein Tastenfeld der Serviceeinrichtung bzw. des Telekommunikationsendgeräts, eine eingehende Kurznachricht oder dergleichen sein.

Die Entsperrfunktion der Mobilfunkkarte richtet unter Koordination der sie aktivierenden Steuereinrichtung einen Zugang für den Benutzer auf der gesperrten Mobilfunkkarte ein, falls dieser sich korrekt authentisiert hat. Hierzu kann die Entsperrfunktion entweder mittels eines entsprechenden Mitteilungssignals eine bestehende Zugangskennung über die Kommunikationsschnittstelle an eine Kartenzugriffseinrichtung einer Serviceeinrichtung oder ein Telekommunikationsendgerät übertragen, um sie dem Benutzer mitzuteilen. Oder die Entsperrfunktion kann auf Veranlassung der Steuereinrichtung eine neue Zugangskennung erzeugen oder eine neue Zugangskennung von der Steuereinrichtung entgegennehmen, um sie auf der Mobilfunkkarte zu hinterlegen, zu aktivieren und gegebenenfalls dem Benutzer mitzuteilen. Falls eine neue Zugangskennung durch den Benutzer anzugeben ist, kann die Steuereinrichtung und/oder die Entsperreinrichtung den Benutzer über ein entsprechendes Aufforderungssignal hierzu auffordern. Nach der Mitteilung einer bestehenden oder der Aktivierung einer neuen Zugangskennung wird ein von der Steuereinrichtung verwalteter Fehlbedienungszähler auf Veranlassung der Entsperreinrichtung initialisiert.

Wie bereits erwähnt, ist es möglich, dass sich der Benutzer fernmündlich, beispielsweise über eine Telefonhotline, an die Serviceeinrichtung wendet. Zur einfachen Realisierung der Kontaktaufnahme kann die Steuereinrichtung der Mobilfunkkarte einen Entsperrmodus unterstützen, in dem einem Benutzer eine Mobilfunkverbindung mit der Serviceeinrichtung ermöglicht wird, obwohl die Mobilfunkkarte gesperrt ist. Außer dieses Entsperrnotrufs im Entsperrmodus (und möglichen weiteren Notrufnummern) können keine weiteren Mobilfunkdienstleistungen der gesperrten Mobilfunkkarte in Anspruch genommen werden. Vorzugsweise schaltet die Steuereinrichtung der Mobilfunkkarte automatisch in den Entsperrmodus, sobald die Mobilfunkkarte gesperrt wird. Auf diese Weise kann ein Benutzer in jedem Falle die Serviceeinrichtung über sein eigenes Telekommunikationsendgerät zum Entsperren der Mobilfunkkarte kontaktieren.

Eine erfindungsgemäße Serviceeinrichtung umfasst eine Authentisierungseinrichtung, eine Kartenzugriffseinrichtung und eine Entsperreinrichtung. Die Authentisierungseinrichtung ist eingerichtet, Authentisierungsdaten des Benutzers mit hinterlegten Referenzdaten abzugleichen, falls sie von einem Kartenherausgeber/Netzbetreiber betrieben wird. Falls die Serviceeinrichtung ein stationäres Serviceterminal ist, ist eine Eingabeeinrichtung vorhanden, z.B. ein Tastenfeld oder ein Mikrophon, über welche der Benutzer die Authentisierungsdaten eingeben kann.

Falls die Serviceeinrichtung von einem von dem Kartenherausgeber und/oder Mobilfunknetzbetreiber autorisierten Dritten betrieben wird, umfasst sie eine Kommunikationseinrichtung, mit welcher eine Kommunikationsverbindung zu dem Kartenherausgeber/Mobilfunknetzbetreiber zum Übertragen einer Berechtigungsanfrage hergestellt werden kann, um zu prüfen, ob der Benutzer zum Zugriff auf die vorgelegte gesperrte Mobilfunkkarte berechtigt ist. Für die Berechtigungsanfrage kann die Kartenzugriffseinrichtung Kartenidentifikationsdaten aus der Mobilfunkkarte auslesen, die dem Kartenherausgeber/Mobilfunknetzbetreiber zusammen mit einer Identität des Benutzers, die die Serviceeinrichtung aufgrund der Authentisierung des Benutzers vorliegen hat, übermittelt werden. Anhand dieser Daten ist es dem Kartenherausgeber/Mobilfunknetzbetreiber möglich, die Zugriffsberechtigung des Benutzers zu prüfen.

Nach einer erfolgreichen Berechtigungsprüfung kann entweder der Kartenherausgeber/Mobilfunknetzbetreiber die Mobilfunkkarte per Fernkonfiguration über eine Luftschnittstelle der Serviceeinrichtung des Dritten entsperren, oder die Serviceeinrichtung empfängt über ihre Kommunikationseinrichtung ein Signal von dem Kartenherausgeber/Mobilfunknetzbetreiber, dass die Mobilfunkkarte zu entsperren ist. In diesem Fall greift die Entsperreinrichtung der Serviceeinrichtung mittels der Kartenzugriffseinrichtung auf die Mobilfunkkarte zu, um ein Einrichten eines Zugang für den Benutzer in der oben beschriebenen Art und Weise zu veranlassen, z.B. durch Hinterlegung und Aktivierung einer erzeugten oder vom Kartenherausgeber/Mobilfunknetzbetreiber empfangenen neuen Zugangskennung oder Auslesen und Anzeigen einer bestehenden Zugangskennung. Hierfür umfasst die Serviceeinrichtung eine entsprechende Anzeige oder einen Drucker. Schließlich veranlasst die Entsperreinrichtung ein Initialisieren des Fehlbedienungszählers der Mobilfunkkarte.

Die Erfindung ist nicht auf bestimmte Telekommunikationsendgeräte, Spezifikationen von Mobilfunkkarten oder bestimmte Mobilfunknetze beschränkt. Gleichwohl ist sie besonders geeignet zur Entsperrung von SIM/USIM-Mobilfunkkarten, wobei die Zugangskennung eine PIN ist.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: den prinzipiellen Verfahrensablauf des Entsperrens einer Mobilfunkkarte;
- Figur 2: eine erfindungsgemäß eingerichtete Mobilfunkkarte;
- Figur 3: eine schematische Darstellung einer ersten beispielhaften Ausführungsalternative zum Entsperren einer in ein Mobiltelefon eingesetzten Mobilfunkkarte;
- Figur 4: eine schematische Darstellung einer zweiten beispielhaften Ausführungsalternative zum Entsperren einer in eine Kartenzugriffseinrichtung einer Serviceeinrichtung eingesetzten Mobilfunkkarte; und
- Figur 5: eine schematische Darstellung einer dritten beispielhaften Ausführungsalternative zum Entsperren einer Mobilfunkkarte über einen vertrauenswürdigen Dritten.

Eine Mobilfunkkarte kann mittels einer Zugangskennung eines Benutzers prinzipiell auf zwei verschiedene Weisen gesperrt sein: Einerseits kann die Mobilfunkkarte gesperrt sein, da die Zugangskennung ungültig ist, z.B. weil ein Fehlbedienungszähler bereits eine vorgegebene Maximalzahl fehlerhafter Zugangskennungseingaben erreicht hat. Andererseits kann die Zugangskennung zwar gültig sein, der Benutzer hat sie jedoch nicht vorliegen oder vergessen, so dass die Mobilfunkkarte auch in diesem Fall nicht ohne weiteres entsperrt werden kann. Die folgenden Verfahren und Vorrichtungen sind auf beide Szenarien gleichermaßen anwendbar.

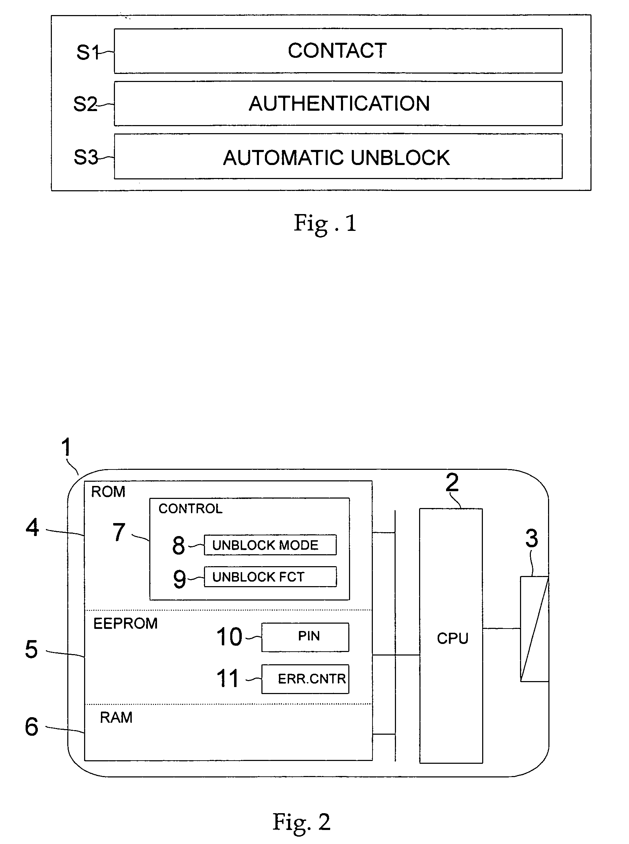

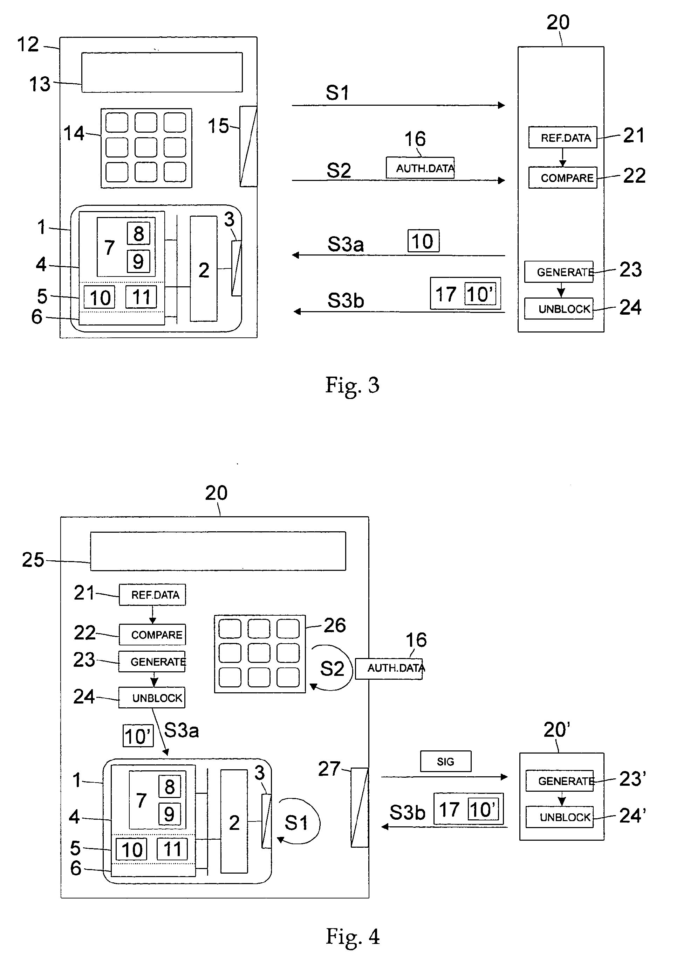

Die in Fig. 2 gezeigte erfindungsgemäß eingerichtete Mobilfunkkarte 1 kann durch das in Fig.1 skizzierte dreistufige Verfahren entsperrt werden. Hierzu nimmt der Benutzer der Mobilfunkkarte 1 in Schritt S1 einen Kontakt mit einer Serviceeinrichtung auf (CONTACT), die autorisiert und befähigt ist, bei Vorliegen bestimmter Voraussetzungen die Mobilfunkkarte 1 zu entsperren. Eine solche Serviceeinrichtung kann von einem Herausgeber der Mobilfunkkarte 1 (einem sogenannten Mobilfunkprovider), einem Mobilfunknetzbetreiber oder von einem autorisierten Dritten betrieben werden, der von einem Kartenherausgeber und/ oder Mobilfunknetzbetreiber als vertrauenswürdig eingestuft wird. Nach dem Entgegennehmen der Kontaktaufnahme des Benutzers durch die Serviceeinrichtung in Schritt S1 wird in Schritt S2 eine Authentisierung des Benutzers von der Serviceeinrichtung durchgeführt (AUTHENTICATION). Bei erfolgreicher Authentisierung des Benutzers gegenüber der Serviceeinrichtung wird schließlich in Schritt S3 die gesperrte Mobilfunkkarte 1 automatisch auf Veranlassung der Serviceeinrichtung entsperrt (AUTOMATIC UNBLOCK). Anhand dieses grundsätzlichen Verfahrensschemas und der in Fig. 2 skizzierten Mobilfunkkarte 1 werden im Zusammenhang mit den Fig. 3,4 und 5 verschiedene Ausführungsalternativen der erfindungsgemäßen Lehre beschrieben.

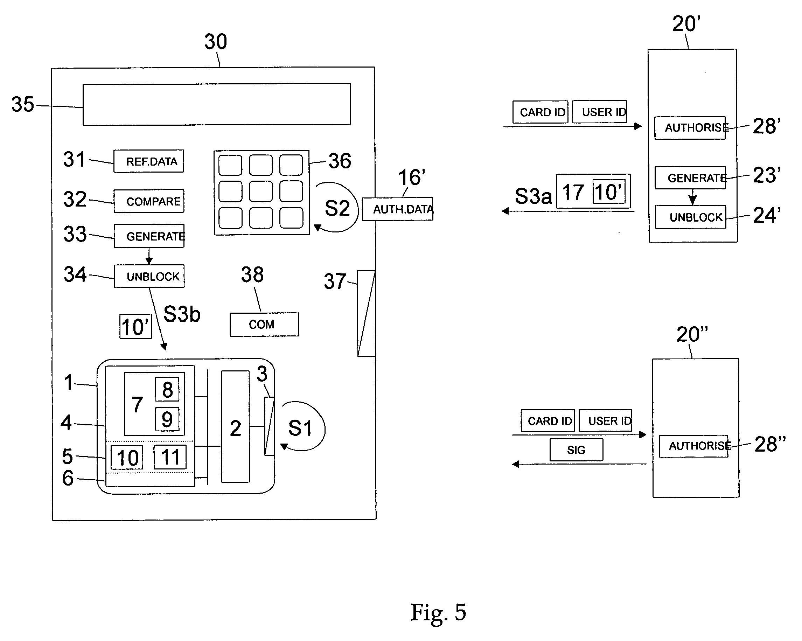

Die Mobilfunkkarte 1 ist zum Entsperren mittels des in Fig.1 skizzierten Verfahrens in ein mobiles Telekommunikationsendgerät, wie z. B. ein Mobiltelefon 12 (Fig. 3), oder eine Kartenzugriffseinrichtung einer Serviceeinrichtung 20, 30 (Fig. 4, 5), z. B. eines Serviceterminals, einzusetzen. Die Mobilfunkkarte 1 umfasst zur Kommunikation mit der/dem Kartenzugriffseinrichtung /Mobiltelefon eine Schnittstelle 3, über die Daten und Anweisungen ausgetauscht werden können. Die Mobilfunkkarte 1 umfasst weiterhin einen Prozessor 2 (CPU) zur Ausführung der auf der Mobilfunkkarte 1 vorliegenden System- und Anwendungsprogramme und ein hierarchisches Speichersystem, umfassend einen permanenten ROM-Speicher 4, einen wiederbeschreibbaren EEPROM-Speicher 5 und einen flüchtigen RAM-Arbeitsspeicher 6. Neben den üblichen Komponenten und Einrichtungen einer herkömmlichen Mobilfunkkarte umfasst die Mobilfunkkarte 1 eine Steuereinrichtung 7 (CONTROL), die die kartenseitigen Funktionen des erfindungsgemäßen Entsperrverfahrens bereitstellt. Da die Steuereinrichtung 7 die Aufgabe hat, die Kartenintegrität zu schützen, wird sie in aller Regel ein Teil der Systemsoftware der Mobilfunkkarte 1 sein und insofern im ROM-Speicher 4 vorliegen. Ferner umfasst die Mobilfunkkarte 1 eine Komponente, die einen Entsperrmodus 8 (UNBLOCK MODE) der Mobilfunkkarte 1 unterstützt, sowie eine Entsperrfunktion 9 (UNBLOCK FCT). Der Entsperrmodus 8 sowie die Entsperrfunktion 9 können einerseits, wie in Fig. 2 gezeigt, als Teil der Steuereinrichtung 7 der Mobilfunkkarte 1 ausgestaltet sein. Sie können jedoch andererseits auch von dieser getrennt und mit ihr interagierend in der Mobilfunkkarte 1 realisiert sein. Der Einsatz und die Wirkungsweise der Komponenten 8 und 9 wird im Zusammenhang mit den Fig. 3 bis 5 beschrieben.

Ferner umfasst die Mobilfunkkarte 1 eine Zugangskennung 10 (PIN) sowie einen Fehlbedienungszähler 11 (ERR.CNTR), die beide im EEPROM-Speicher 5 abgelegt sind, da sie im Verlauf der Lebensdauer der Mobilfunkkarte 1 veränderbar sein müssen. Die Zugangskennung 10 ist vorzugsweise eine PIN ("Personal Identification Number") oder eine CHV1 ("Card Holder Verification") nach dem ETSI Standard 3 GPP 51.011. Bei der Mobilfunkkarte 1 handelt es sich vorzugsweise um eine herkömmliche SIM-Karte oder eine USIM-Karte, die dem Benutzer einen Zugang zu einem Mobilfunknetz, vorzugsweise dem GSM-Netz bzw. UMTS-Netz, zur Verfügung stellt.

Beim Einbuchen in ein Mobilfunknetz gibt der Benutzer die Zugangskennung über ein entsprechendes Tastenfeld an einem Mobilfunktelefon ein, woraufhin eine Prüfeinrichtung der Mobilfunkkarte 1, beispielsweise realisiert als Teil der Steuereinrichtung 7, die eingegebene Zugangskennung mit der im EEPROM-Speicher 5 abgespeicherten Zugangskennung 10 vergleicht. Falls die beiden Nummern übereinstimmen, wird die Mobilfunkkarte 1 in das Mobilfunknetz eingebucht und der Benutzer kann die entsprechenden Dienstleistungen in Anspruch nehmen. Falls jedoch der Benutzer die Zugangskennung 10 nicht zur Verfügung hat, hat er keine Möglichkeit die Mobilfunkkarte wieder zu entsperren. Andererseits ist es auch möglich, dass der Benutzer mehrfach eine falsche Zugangskennung zum Einbuchen in das Mobilfunknetz eingegeben hat. Diese Falscheingaben werden durch den Fehlbedienungszähler 11 protokolliert, indem er bei jeder fehlerhaften Eingabe inkrementiert wird. Wenn eine vorgegebene Maximalzahl von fehlerhaften Kennungseingaben erreicht ist, wird die Zugangskennung 10 üblicherweise ungültig, so dass sich der Benutzer selbst bei Eingabe der richtigen Zugangskennung nicht mehr in das Mobilfunknetz einbuchen kann. Gemäß des ETSI Standards 3GPP 51.011 ist diese Maximalzahl auf den Wert 3 gesetzt, so dass ein Benutzer spätestens beim dritten Versuch eine korrekte Zugangskennung 10 eingeben muss, um zu verhindern, dass die Zugangskennung 10 ungültig wird.

Fig. 3 skizziert eine Ausführungsalternative der vorliegenden Erfindung, bei der ein Benutzer seine Mobilfunkkarte 1 mit Hilfe eines Mobiltelefons 12 entsperren kann, in welchem die Mobilfunkkarte 1 eingesetzt ist. Die Serviceeinrichtung 20 ist hierbei eine zentrale Einrichtung des Kartenherausgebers/Netzbetreibers, die nur mit Telekommunikationsmitteln kontaktiert werden kann.

Im Beispiel der Fig. 3 wird der Kontaktierungsschritt S1 telefonisch über das Mobiltelefon 12 durchgeführt. Hierzu ist auf der Mobilfunkkarte 1 ein Entsperrmodus 8 implementiert, der von der Steuereinrichtung 7 aktiviert wird, sobald die Mobilfunkkarte 1 gesperrt ist, d. h. sobald sich der Benutzer durch Ausschalten seines Mobiltelefons 12 aus dem Mobilfunknetz ausbucht. Der Entsperrmodus 8 bietet dann eine Möglichkeit, trotz gesperrter Mobilfunkkarte 1 mit der Serviceeinrichtung 20 telefonischen Kontakt aufzunehmen, indem beispielsweise eine vorgegebene Kundendienst-Telefonnummer eines Kartenherausgebers/Netzbetreibers selbst bei gesperrter Mobilfunkkarte 1 gewählt werden kann.

In Schritt S2 authentisiert sich der Benutzer gegenüber der Serviceeinrichtung 20. Dies kann dadurch realisiert werden, dass der Benutzer bestimmte Authentisierungsdaten 16 (AUTH.DATA) einem Kundendienstmitarbeiter der Serviceeinrichtung 20 mündlich mitteilt, beispielsweise persönliche Daten oder Kennwörter, die der Benutzer bei Abschluss eines Mobilfunkvertrags oder bei Aushändigen der Mobilfunkkarte 1 dem Kartenherausgeber/Netzbetreiber mitgeteilt hat. Ebenso ist es möglich, dass der Benutzer Authentisierungsdaten 16 über ein Tastenfeld 14 des Mobiltelefons 12 eingibt, z.B. ein mit dem Kartenherausgeber/Netzbetreiber vereinbartes Kennwort. Zur Prüfung der Authentisierung des Benutzers umfasst die Serviceeinrichtung 20 eine Authentisierungseinrichtung 22 (COMPARE), die die empfangenen Authentisierungsdaten 16 mit der Serviceeinrichtung 20 vorliegenden Referenzdaten 21 (REF.DATA) vergleicht. Falls sich eine Übereinstimmung der Authentisierungsdaten 16 der Referenzdaten 21 ergibt, wird der Entsperrschritt S3 durchgeführt.

Für die Durchführung des Entsperrschritts S3 skizziert Fig. 3 zwei Alternativen, nämlich jeweils für den Fall einer gültigen aber nicht vorliegenden Zugangskennung 10 (S3a) und einer ungültig geworden Zugangskennung (S3b), die neu eingerichtet werden muss. Im ersten Fall ist es nur notwendig, dass die Serviceeinrichtung 20 dem Benutzer nach korrekter Authentisierung in Schritt S3a die derzeit gültige Zugangskennung 10 mitteilt. Dies kann, falls der Serviceeinrichtung 20 die Zugangskennung 10 vorliegt, einerseits durch eine mündliche Ansage geschehen oder andererseits über ein entsprechendes Mitteilungssignal an das Mobiltelefon 12, beispielsweise in Form einer Kurznachricht (SMS, MMS), die der Benutzer auf der Anzeige 13 des Mobiltelefons 12 lesen kann. In der Regel wird die Serviceeinrichtung 20 die Zugangskennung 10 jedoch nicht kennen. Dann ist es möglich, die Mobilfunkkarte 10 durch einen datentechnischen Zugriff der Serviceeinrichtung 20 auf die Mobilfunkkarte 1 zu veranlassen, die Zugangskennung 10 dem Benutzer mitzuteilen, z.B. durch eine Mitteilung auf der Anzeige 13.

Ein derartiger datentechnischer Zugriff kann beispielsweise durch Fernkonfiguration über eine Luftschnittstelle (OTA-Schnittstelle; "over-the-air") des Mobiltelefons 12 realisiert werden. Die Fernkonfiguration über eine OTA-Schnittstelle bietet die Möglichkeit, Daten oder Anweisungen ohne Kabel oder Infrarottechnik direkt über das Mobilfunknetz an das Mobiltelefon 12 zu senden. Auf diese Weise sind beispielsweise Aktualisierungen von Softwareapplikationen oder Neukonfigurationen von Menüs und netzbetreiberabhängigen Einstellungen möglich.

Falls die Zugangskennung 10 ungültig ist, weil der Fehlbedienungszähler 11 die Maximalzahl erreicht hat, wird zum Entsperren der Mobilfunkkarte 1 eine neue Zugangskennung 10' eingerichtet. Auch dies wird vorzugsweise durch Fernkonfiguration über die Luftschnittstelle 15 des Mobiltelefons 12 vorgenommen. Zum Realisieren des Entsperrschritts S3b wird eine Entsperranweisung 17 von einer Entsperreinrichtung 24 (UNBLOCK) der Serviceeinrichtung 20 generiert und über die Luftschnittstelle 15 an die Mobilfunkkarte 1 gesendet, wo die Steuereinrichtung 7 die Entsperranweisung 17 aufnimmt und umsetzt.

Die Entsperranweisung 17 kann eine neue Zugangskennung 10' umfassen, die von einem Kennungsgenerator 23 (GENERATE) der Serviceeinrichtung 20 erzeugt wurde. Ebenso kann die Entsperranweisung 17 lediglich ein Löschen oder Freischalten der Zugangskennung 10 auf der Mobilfunkkarte 1 bewirken, so dass der Benutzer über entsprechende Mitteilung auf der Anzeigeeinrichtung 13 aufgefordert wird, eine neue Zugangskennung über das Tastenfeld 14 einzugeben, die anschließend in der Mobilfunkkarte 1 durch die Steuereinrichtung 7 aktiviert wird. Die Steuereinrichtung 7 empfängt also die Entsperranweisung 17 der Serviceeinrichtung 20, decodiert und interpretiert diese und setzt sie um, indem eine neue Zugangskennung 10' für den Benutzer auf der Mobilfunkkarte 1 eingerichtet wird. Falls die neue Zugangskennung 10' von der Serviceeinrichtung 20 bereitgestellt wird, wird dem Benutzer die neue Zugangskennung 10' in geeigneter Form mitgeteilt, beispielsweise über eine Mitteilung auf der Anzeige 13 des Mobiltelefons 12 oder eine sonstige technisch mögliche Mitteilung.

Fig. 4 zeigt den Fall, dass ein Benutzer mit einer gesperrten Mobilfunkkarte 1 eine Serviceeinrichtung 20 persönlich aufsucht. Eine derartige Serviceeinrichtung 20 kann beispielsweise eine Filiale, ein Verkaufsgeschäft, ein "Point-of-Sale" (POS) oder eine besondere Einrichtung eines Kartenherausgebers/Netzbetreibers sein, die über die notwendigen technischen Voraussetzungen verfügt. In Fig. 4 ist die Serviceeinrichtung 20 als ein stationäres Serviceterminal realisiert, das in einer Filiale oder an einem öffentlich oder halböffentlich zugänglichen Ort aufgestellt sein kann, z.B. in einem Bahnhof. Der Serviceautomat 20 verfügt über eine Anzeige 25, ein Tastenfeld 26, diverse interne Komponenten 21, 22, 23, 24 sowie eine Luftschnittstelle 27 und eine Kartenzugriffseinrichtung, über die das Serviceterminal 20 auf die Mobilfunkkarte 1 zugreifen kann. Ebenso ist es möglich, dass die Serviceeinrichtung 20 lediglich aus einer entsprechenden Kartenzugriffseinrichtung besteht, die in einer Filiale eingerichtet ist, während die weiteren Interaktionen zwischen Benutzer und Serviceeinrichtung 20 mündlich oder manuell über einen Kundendienstmitarbeiter abgewickelt werden. Bei der in Fig. 4 skizzierten Serviceeinrichtung 20 in Automatenform ist eine weitere Interaktion zwischen dem Benutzer und einem Kundendienstmitarbeiter jedoch nicht notwendig.

Bei der in Fig. 4 skizzierten Ausführungsalternative besteht der Kontaktaufnahmeschritt S1 des Benutzers darin, dass er seine Mobilfunkkarte 1 in eine entsprechende Kartenzugriffseinrichtung des Serviceautomaten 20 einführt und einen Kontakt herstellt. Der Authentisierungsschritt S2 besteht dann darin, dass der Benutzer beispielsweise nach Aufforderung durch die Serviceeinrichtung 20 persönliche Daten oder Kennwörter über ein Tastenfeld 26 des Serviceautomaten 20 eingibt, die die Serviceeinrichtung 20 oder eine nachgeschaltete zentrale Stelle, mit der das Serviceterminal in Kontakt steht, in Form von Referenzdaten 21 vorliegen hat. Die eingegebenen Authentisierungsdaten 16 (AUTH.DATA) werden dann von einer Authentisierungseinrichtung 22 (COMPARE) mit den vorliegenden Referenzdaten 21 (REF.DATA) verglichen, und im Falle einer Übereinstimmung wird der Entsperrschritt S3 veranlasst. Falls die Serviceeinrichtung 20 lediglich aus einer von einem Kundendienstmitarbeiter bedienten Kartenzugriffseinrichtung in einer Filiale besteht, kann der Authentisierungsschritt S2 auch darin bestehen, dass der Benutzer seine Authentisierungsdaten 16 dem Kundendienstmitarbeiter persönlich mitteilt, der diese z.B. durch telefonisches Kontaktieren einer Zentrale verifiziert oder über anderweitige technische Hilfsmittel eine zentrale Datenbank des Kartenherausgebers/Mobilfunknetzbetreibers zum Zwecke der Überprüfung der Authentisierungsdaten 16 anfragt.

Zur Realisierung des Entsperrschritts S3 skizziert Fig. 4 zwei Alternativen. Bei der Alternative S3a wird die Mobilfunkkarte 1 mittels einer Entsperreinrichtung 24 (UNBLOCK) des Serviceterminals 20 automatisch entsperrt, indem eine neue Zugangskennung 10' von einem Kennungsgenerator 23 (GENERATE) erzeugt und auf der Mobilfunkkarte 1 hinterlegt und aktiviert wird. Dies kann einerseits dadurch geschehen, dass die Entsperreinrichtung 24 die neue Zugangskennung 10' unmittelbar im EEPROM-Speicher 5 der Mobilfunkkarte 1 hinterlegt und dort aktiviert. Andererseits ist es möglich, dass die neue Zugangskennung 10' an die Steuereinrichtung 7 der Mobilfunkkarte 1 übergeben wird, die ihrerseits die notwendigen Schritte zum Hinterlegen und Aktivieren durchführt. In jedem Falle wird die neue Zugangskennung 10' über die Anzeigeeinrichtung 25 dem Benutzer mitgeteilt. Alternativ kann Schritt S3a auch dadurch realisiert werden, dass ein Kundendienstmitarbeiter nach Überprüfen der Authentisierungsdaten 16 des Benutzers im Authentisierungsschritt S2 direkt eine neue Zugangskennung 10' von einer zentralen Stelle erhält, die er mittels einer Kartenzugriffseinrichtung vor Ort auf der Mobilfunkkarte 1 hinterlegen und aktivieren kann. In diesem Falle kann der Kundendienstmitarbeiter dem Benutzer die neue Zugangskennung 10' auch mitteilen.

Alternativ hierzu kann der Entsperrschritt S3b durch eine Fernkonfiguration über eine Luftschnittstelle 27 der Serviceeinrichtung 20 durchgeführt werden. Eine derartige Fernentsperrung wird durch ein Signal (SIG) veranlasst, das die Serviceeinrichtung 20 an eine zentrale Stelle 20' sendet, um dieser mitzuteilen, dass eine zu entsperrende Mobilfunkkarte 1 vorliegt, deren Benutzer sich ordnungsgemäß authentisiert hat. Die zentrale Stelle 20' wird hier als Teil der Serviceeinrichtung 20 betrachtet, die im vorliegenden Fall insofern verteilt organisiert ist. Bei der zentralen Stelle 20' kann es sich um einen Zentralcomputer eines Kartenherausgebers/Netzbetreibers handeln, der speziell dazu eingerichtet ist, Mobilfunkkarten 1 auf Anfrage zu entsperren. Nach Eingang des Signals generiert die externe Stelle 20' über einen Kennungsgenerator 23' (GENERATE) eine neue Zugangskennung 10' und eine Entsperreinrichtung 24' (UNBLOCK) sendet eine Entsperranweisung 17, die die generierte Zugangskennung 10' umfasst, vorzugsweise verschlüsselt über die Luftschnittstelle 27 des Serviceautomaten 20 an die Mobilfunkkarten 1. Ähnlich wie im Schritt S3b der Ausführungsalternative der Fig. 3 ist es auch beim Schritt S3b der Fig. 4 notwendig, dass die Steuereinrichtung 7 eingerichtet ist, die per Fernkonfiguration eingehende Entsperranweisung 17 zu verarbeiten.

Die Entsperranweisung 17 kann beispielsweise ein neu definiertes Kommando "Update PIN" oder "Update CHV1" der Mobilfunkkarte 1 sein. Hierzu kann auf der Mobilfunkkarte 1 beispielsweise analog zu dem im GSM-Standard bereits vorhanden Kommando "Update Binary" ein Kommando "Update PIN" oder "Update CHV1" implementiert werden, welches es erlaubt, den für die Zugangskennung 10 im EEPROM-Speicher 5 vorgesehenen Speicherbereich zu überschreiben und den Fehlbedienungszähler 11 auf 0 zu setzen. Das Kommando "Update CHV" verifiziert dabei keinerlei Zugangsrechte und führt auch keine sonstigen Sicherheitsmaßnahmen der Mobilfunkkarte 1 aus, sondern überschreibt lediglich die entsprechenden Speicherbereiche für die Zugangskennung 10 und den Fehlbedienungszähler 11 in dem EEPROM-Speicher 5. Aus diesem Grunde ist es zweckmäßig, die Anwendung und Übertragung eines derartigen Kommandos speziell zu sichern. Es wird deshalb über die Luftschnittstelle 27 vorzugsweise nur verschlüsselt übertragen, z.B. durch das DES, 3DES- oder ein RSA-Verfahren geschützt. Im Ergebnis wird im EEPROM-Speicher 5 die neue Zugangskennung 10' hinterlegt. Alternativ ist es auch möglich, dass die Zugangskennung auf einen bestimmten vorbekannten Standardwert, z. B. "0000", gesetzt wird und anschließend der Benutzer aufgefordert wird, eine neue Zugangskennung bereitzustellen oder über ein Tastenfeld 26 einzugeben, die dann anstelle des Standardwerts aktiviert wird.

Falls sich der Benutzer mit seiner gesperrten Mobilfunkkarte 1 in einer Filiale des Kartenherausgebers/Mobilfunknetzbetreibers einfindet, die lediglich über eine Kartenzugriffseinrichtung verfügt, wird dort von einem Kundendienstmitarbeiter bei Anwesenheit des Benutzers mittels der Kartenzugriffseinrichtung eine Entsperranweisung 17 zum Einrichten eines Zugangs von der zentralen Stelle 20' angefordert und über eine Luftschnittstelle der Kartenzugriffseinrichtung an die Mobilfunkkarte 1 weitergeleitet.

Fig. 5 zeigt eine weitere Ausführungsalternative des erfindungsgemäßen Verfahrens. Hierbei wendet sich der Benutzer mit einer gesperrten Mobilfunkkarte 1 nicht direkt an einen Kartenherausgeber/Netzbetreiber sondern an einen zum Entsperren einer gesperrten Mobilfunkkarte 1 autorisierten Dritten, der von einem Kartenherausgeber/Mobilfunknetzbetreiber als vertrauenswürdig eingestuft ist. Die Serviceeinrichtung, mit der der Benutzer in Schritt S1 Kontakt aufnimmt, gegenüber der er sich in Schritt S2 authentisiert und die die gesperrte Mobilfunkkarte 1 in Schritt S3 schließlich entsperrt, ist eine verteilt organisierte Serviceeinrichtung, die aus einem vor Ort befindlichen Serviceterminal 30 des Dritten und einer nachgeschalteten zentralen Service-Stelle 20 oder 20' besteht.

Die Serviceeinrichtung 30 des vertrauenswürdigen Dritten kann beispielsweise ein Bank- oder Geldautomat einer kontoführenden Bank oder eines Kreditkarteninstituts sein oder ein Verkaufs- oder Serviceautomat eines sonstigen Dienstleistungsunternehmens, dem zur zweifelsfreien Authentisierung des Benutzers geeignete Referenzdaten vorliegen. Die Serviceeinrichtung kann z.B. eine gemeinsame Notfalleinrichtung von Mobilfunkkartenherausgebern und Netzbetreibern sein. Darüber hinaus kann die Serviceeinrichtung 30 beispielsweise auch von einem vertrauenswürdigen Internet-Shop betrieben werden (z. B. E-Bay, Amazon oder dergleichen), bei dem der Benutzer sich angemeldet hat. In jedem Falle umfasst die Serviceeinrichtung 30 eine Kartenzugriffseinrichtung, um etwaige Chipkarten auslesen zu können, die der Benutzer im Zusammenhang mit einer Dienstleistung des Dritten mit sich führt. Auch kann es sich bei einer solchen Kartenzugriffseinrichtung um eine private Kartenleseeinrichtung handeln, die der Benutzer am heimischen PC betreibt, so dass nach einer Authentisierung über einen vetrauenswürdigen Internet-Shop die Mobilfunkkarte 1 entsperrt werden kann. Damit eine Mobilfunkkarte des herkömmlichen ID-1 Formats von einer normalen Chipkartenleseeinrichtung bearbeitet werden kann, ist unter Umständen eine entsprechende Adapterkarte im üblichen Chipkartenformat einzusetzen.

Der Schritt S1 des Kontaktaufnehmens besteht bei der in Fig. 5 skizzierten Ausführungsalternative wieder in dem Einführen der Mobilfunkkarte 1 in eine entsprechende Kartenzugriffseinrichtung des Serviceautomaten 30. Der Authentisierungsschritt S2 wird durchgeführt, indem der Benutzer Authentisierungsdaten 16' bereitstellt, zu welchen der Dritte korrespondierende Referenzdaten 31 vorliegen hat. Die hierbei verwendeten Authentisierungsdaten 16' (AUTH.DATA) und Referenzdaten 31 (REF.DATA) sind unabhängig von den Authentisierungs- und Referenzdaten 16, 21 der Fig. 3 und 4, die der Benutzer bei einem Kartenherausgeber/Mobilfunknetzbetreiber hinterlegt hat, da dem Dritten naturgemäß nicht die Referenzdaten eines Kartenherausgebers/Netzbetreibers vorliegen. Die dem Dritten vorliegenden Referenzdaten 31 hat der Benutzer dem Dritten (z.B. eine Bank) möglicherweise im Zusammenhang mit einer Dienstleistung (z.B. Kontoführung) des Dritten überlassen. Falls die Serviceeinrichtung 30 eine Filiale des Dritten ist, nennt der Benutzer die Authentisierungsdaten 16' einem Kundendienstmitarbeiter, so dass dieser die Authentisierungsdaten 16' mit vorliegenden Referenzdaten 31 z.B. manuell vergleichen kann.

Nach einer erfolgreichen Authentisierung wird der Dritte die Berechtigung des Benutzers überprüfen, auf die von ihm als gesperrt vorgelegte Mobilfunkkarte 1 zuzugreifen, um einen Missbrauch auszuschließen. Die Überprüfung der Zugriffsberechtigung kann dann einerseits von dem Dritten oder einem Mitarbeiter des Dritten selbst durchgeführt werden, beispielsweise dadurch, dass der Benutzer eine Zugriffsberechtigung durch einen vorgelegten Mobilfunkvertrag oder sonstige mit der Mobilfunkkarte im Zusammenhang stehende Unterlagen oder mittels einer personalisierten Mobilfunkkarte 1 nachweist. In diesem Fall kann bei nachgewiesener Zugriffsberechtigung die Mobilfunkkarte 1 sofort entsperrt werden.

Im Regelfall wird sich der Dritte jedoch mit der Überprüfung der Zugriffsberechtigung an eine zentrale Stelle 20' oder 20" des Kartenherausgebers/Netzbetreibers wenden, die im Zusammenhang mit der Ausführungsalternative der Fig. 5 als Teil einer verteilt organisierten Serviceeinrichtung 30/20' oder 30/20" angesehen werden kann. Falls die Serviceeinrichtung 30 ein Serviceterminal ist, beispielsweise ein Geld- oder Warenautomat, kann hierzu von einer Kommunikationseinrichtung 38 (COM) der Serviceeinrichtung 30 eine Berechtigungsanfrage an eine zentrale Stelle 20' oder 20" des Kartenherausgebers/Netzbetreibers gesendet werden, die sämtliche Daten umfasst, die zur Prüfung der Zugriffsberechtigung benötigt werden, z. B. eine aus der Mobilfunkkarte 1 ausgelesene Kartenidentifikation (CARD ID) und eine Benutzeridentifikation (USER ID), die beispielsweise aus den Referenzdaten 31 abgeleitet werden kann. Die zentrale Stelle 20' überprüft mit einer Autorisierungseinrichtung 28' (AUTORISE) die Zugriffsberechtigung und erzeugt im Erfolgsfalle mittels eines Kennungsgenerators 23' (GENERATE) eine neue Zugangskennung 10', die schließlich in Schritt S3a mittels einer Entsperranweisung 17 über eine Luftschnittstelle 37 der Serviceeinrichtung 30 an die Mobilfunkkarte 1 zur Umsetzung durch deren Steuereinrichtung 7 weitergeleitet wird.

Alternativ hierzu ist es möglich, dass eine externe Stelle 20" die eingehende Kartenidentifikation (CARD ID) und die Benutzeridentifikation (USER ID) mittels einer Autorisierungseinrichtung 28" überprüft und im Erfolgsfalle ein Bestätigungssignal (SIG) an die Serviceeinrichtung 30 zurücksendet, so dass der eigentliche Entsperrschritt S3b von der Serviceeinrichtung 30 vor Ort vorgenommen wird. Es kann dann einerseits mittels eines Kennungsgenerators 33 eine neue Zugangskennung 10' erzeugt werden, die mittels einer Entsperreinrichtung 34 (UNBLOCK) der Serviceeinrichtung 30 direkt oder mittelbar über die Steuereinrichtung 7 der Mobilfunkkarte 1 auf der Mobilfunkkarte 1 hinterlegt und aktiviert wird. Andererseits ist es auch möglich, dass der Benutzer von dem Serviceterminal 30 über dessen Anzeige 35 aufgefordert wird, eine neue Zugangskennung 10' über ein Tastenfeld 36 einzugeben. Ebenso kann der Benutzer aufgefordert werden, einem Mitarbeiter der Serviceeinrichtung 30 eine Zugangskennung 10' zu nennen, die der Mitarbeiter mit Hilfe einer Kartenzugriffseinrichtung auf der Karte hinterlegt und aktiviert.

## Patentansprüche

1. Verfahren zum Entsperren einer mittels einer Zugangskennung (10) eines Benutzers gesperrten Mobilfunkkarte (1), umfassend die Schritte des
- Entgegennehmens (S1) einer Kontaktaufnahme eines Benutzers der Mobilfunkkarte (1) durch eine Serviceeinrichtung (20; 30); und
- Authentisierens (S2) des Benutzers gegenüber der Serviceeinrichtung (20; 30);
**gekennzeichnet durch** die weiteren Schritte des
- automatischen Einrichtens (S3; S3a, S3b) eines Zugangs für den Benutzer auf der Mobilfunkkarte (1) auf Veranlassung der Serviceeinrichtung (20; 30),
- wobei die Serviceeinrichtung (20; 30) eine von einem Kartenherausgeber und/oder Mobilfunknetzbetreiber unabhängigen Dritten, der von dem Kartenherausgeber und/oder Mobilfunknetzbetreiber als vertrauenswürdig eingestuft ist, betriebene Einrichtung umfasst, die zumindest den Schritt des Authentisierens (S2) durchführt,
- wobei beim Schritt des Einrichtens (S3; S3a, S3b) des Zugangs eine neue Zugangskennung (10') von der Serviceeinrichtung (20; 30) auf der Mobilfunkkarte (1) eingerichtet wird und dem Benutzer die neue Zugangskennung (10') mitgeteilt wird.
- wobei beim Schritt des Einrichtens (S3; S3a, S3b) die neue Zugangskennung (10') von der Serviceeinrichtung (20; 20'; 30) bereitgestellt wird.

2. Verfahren nach Anspruch 1, **dadurch gekennzeichnet, dass** die Serviceeinrichtung (20; 30) von einem Kartenherausgeber der Mobilfunkkarte (1) und/oder einem Mobilfunknetzbetreiber betrieben wird.

3. Verfahren nach Anspruch 1 oder 2, **dadurch gekennzeichnet, dass** beim Schritt des Einrichtens (S3; S3a, S3b) des Zugangs der Kartenherausgeber der Mobilfunkkarte (1) und/oder der Mobilfunkbetreiber auf Veranlassung des Dritten den Zugang einrichtet.

4. Verfahren nach Anspruch 1 oder 2, **dadurch gekennzeichnet, dass** beim Schritt des Einrichtens (S3; S3a, S3b) der Zugang von dem Dritten über eine Kartenzugriffseinrichtung des Dritten eingerichtet wird.

5. Verfahren nach einem der Anspruche 1 bis 3, **dadurch gekennzeichnet, dass** mittels der gesperrten Mobilfunkkarte (1) in einem Entsperrmodus (8) zumindest die Serviceeinrichtung (20) kontaktiert werden kann, wobei der Schritt des Entgegennehmens (S1) der Kontaktaufnahme über eine Mobilfunkverbindung zwischen einem mobilen Telekommunikationsendgerat (12), in welches die gesperrte Mobilfunkkarte (1) eingesetzt ist, und der Serviceeinrichtung (20) mittels der Mobilfunkkarte (1) in dem Entsperrmodus (9) erfolgt.

6. Verfahren nach einem der Anspruche 1 bis 3, **dadurch gekennzeichnet, dass** der Schritt des Entgegennehmens (S 1) der Kontaktaufnahme über eine mündliche Kommunikationsverbindung zwischen dem Benutzer und der Serviceeinrichtung (20; 30) erfolgt.

7. Verfahren nach Anspruch 6, **dadurch gekennzeichnet, dass** der Benutzer die Serviceeinrichtung (20; 30) persönlich aufsucht.

8. Verfahren nach einem der Anspruche 1 bis 7, **dadurch gekennzeichnet, dass** beim Schritt des Authentisierens (S2) Authentisierungsdaten (16; 16') des Benutzers mit der Serviceeinrichtung (20; 30) zur Verfügung stehenden Referenzdaten (21; 31) abgeglichen werden, insbesondere persönlichen Daten und/oder Kennwörtern des Benutzers.

9. Verfahren nach Anspruch 8, **dadurch gekennzeichnet, dass** die Referenzdaten (21; 31) bei Erwerben der Mobilfunkkarte (1) bei einem Kartenherausgeber und/oder Mobilfunknetzbetreiber hinterlegt werden.

10. Verfahren nach Anspruch 8 mit 1 oder 2, **dadurch gekennzeichnet, dass** die Referenzdaten (31) zum Zwecke der Authentisierung durch den Dritten bei dem Dritten hinterlegt werden.

11. Verfahren nach Anspruch 10, **dadurch gekennzeichnet, dass** beim Schritt des Authentisierens (S2) eine die Berechtigung des Benutzers zum Zugriff auf die Mobilfunkkarte (1) betreffende, über den Dritten erfolgte Anfrage von dem Kartenherausgeber und/oder Mobilfunknetzbetreiber geprüft wird.

12. Verfahren nach einem der Anspruche 1 bis 11, **dadurch gekennzeichnet, dass** beim Schritt des Einrichtens (S3; S3a, S3b) der Zugang über eine Schnittstelle (15; 27; 37), insbesondere Luftschnittstelle, eines mobilen Telekommunikationsendgeräts (12) oder einer Serviceeinrichtung (20; 30) eingerichtet wird, in welchem/welcher die Mobilfunkkarte (1) eingesetzt ist.

13. Verfahren nach Anspruch 11, **dadurch gekennzeichnet, dass** der Schritt des Einrichtens (S3; S3a, S3b) die folgenden Schritte umfasst:
- Senden einer Entsperranweisung (17) von der Serviceeinrichtung (20; 20') über die Schnittstelle (15; 27; 37) an das mobile Telekommunikationsendgerät (12);
- Aktivieren einer auf der Mobilfunkkarte (1) implementierten Entsperrfunktion (9) durch die Entsperranweisung (17); und
- Einrichten des Zugangs nach Aktivierung der Entsperrfunktion (9).

14. Verfahren nach Anspruch 13, **dadurch gekennzeichnet, dass** der Zugang durch die aktivierte Entsperrfunktion (9) automatisch eingerichtet wird.

15. Verfahren nach einem der Anspruche 12 bis 14, **dadurch gekennzeichnet, dass** beim Schritt des Einrichtens (S3; S3a, S3b) des Zugangs über die Schnittstelle (15; 27; 37) Daten verschlüsselt übertragen werden.

16. Verfahren nach einem der Ansprüche 1 bis 15, **dadurch gekennzeichnet, dass** beim Schritt des Einrichtens (S3; S3a, S3b) des Zugangs die bestehende Zugangskennung (10) dem Benutzer mitgeteilt wird.

17. Verfahren nach einem der Ansprüche 1 bis 16, **dadurch gekennzeichnet, dass** beim Schritt des Einrichtens (S3; S3a, S3b) die neue Zugangskennung (10') von der Mobilfunkkarte (1) generiert wird.

18. Verfahren nach einem der Ansprüche 1 bis 16, **dadurch gekennzeichnet, dass** beim Schritt des Einrichtens (S3; S3a, S3b) des Zugangs der Benutzer aufgefordert wird, die einzurichtende Zugangskennung (10') anzugeben.

19. Verfahren nach Anspruch 18, **dadurch gekennzeichnet, dass** der Benutzer die neue Zugangskennung (10') über eine Kartenzugriffseinrichtung einer Serviceeinrichtung (20; 30) oder ein mobiles Telekommunikationsendgerät (12), in welche/welches die Mobilfunkkarte (1) eingesetzt ist, auf der Mobilfunkkarte (1) hinterlegt.

20. Verfahren nach einem der Ansprüche 1 bis 19, **dadurch gekennzeichnet, dass** beim Schritt des Einrichtens (S3; S3a, S3b) des Zugangs ein Fehlbedienungszähler (11) der Mobilfunkkarte (1) initialisiert wird.

21. Verfahren nach einem der Ansprüche 1 bis 18, **dadurch gekennzeichnet, dass** das Verfahren durchgeführt wird, wenn die Mobilfunkkarte (1) aufgrund mehrfachen Eingebens fehlerhafter Zugangskennungen für den Benutzer gesperrt worden ist.

22. Verfahren nach einem der Ansprüche 1 bis 21, **dadurch gekennzeichnet, dass** das Verfahren im Zusammenhang mit einer SIM-Karte oder USIM-Karte als Mobilfunkkarte (1) und einer PIN als Zugangskennung (10) der Mobilfunkkarte (1) durchgeführt wird.

23. Mobilfunkkarte (1) umfassend eine Steuereinrichtung (7) mit einer Entsperrfunktion (9) zum Entsperren einer mittels einer Zugangskennung (10) eines Benutzers gesperrten Mobilfunkkarte (1) und eine offene Schnittstelle (3) zur externen Kommunikation z.B. mit einer Kartenzugriffseinrichtung einer Serviceeinrichtung (20; 30) oder einem mit der Serviceeinrichtung (30) kommunizierenden mobilen Telekommunikationsendgerät (12), **dadurch gekennzeichnet, dass** die Entsperrfunktion (9) eingerichtet ist, über die Schnittsteile (3) mittels einer Entsperranweisung aktiviert zu werden, um einen Zugang für den Benutzer auf der Mobilfunkkarte (1) einzurichten, wenn die Mobilfunkkarte (1) mittels der Zugangskennung (10) gesperrt ist,
wobei die Mobilfunkkarte (1) eingerichtet ist ein Verfahren gemäß den Ansprüchen 1 bis 22 auszuführen.

24. Mobilfunkkarte (1) nach Anspruch 23, **dadurch gekennzeichnet, dass** die Mobilfunkkarte (1) eingerichtet ist, in die Kartenzugriffseinrichtung oder das mobile Telekommunikationsendgerät (12) eingesetzt zu werden.

25. Mobilfunkkarte (1) nach Anspruch 23 oder 24, **dadurch gekennzeichnet, dass** die Entsperrfunktion (9) eingerichtet ist, mittels einer von der Serviceeinrichtung (20; 20'; 30) an die Mobilfunkkarte (1) übertragenen Entsperranweisung aktiviert zu werden.

26. Mobilfunkkarte (1) nach einem der Anspruche 23 bis 25, **dadurch gekennzeichnet, dass** die Entsperrfunktion (9) eingerichtet ist, ein die Zugangskennung (10) umfassendes Mitteilungssignal zu erzeugen und über die Schnittstelle (3) auszugeben.

27. Mobilfunkkarte (1) nach einem der Ansprüche 23 bis 26, **dadurch gekennzeichnet, dass** die Entsperrfunktion (9) eingerichtet ist, eine neue Zugangskennung (10') auf der Mobilfunkkarte (1) zu hinterlegen.

28. Mobilfunkkarte (1) nach Anspruch 27, **dadurch gekennzeichnet, dass** die Entsperrfunktion (9) eingerichtet ist, die neue Zugangskennung (10') zu generieren.

29. Mobilfunkkarte (1) nach Anspruch 27, **dadurch gekennzeichnet, dass** die Entsperrfunktion (9) eingerichtet ist, eine in der Entsperranweisung (17) enthaltene neue Zugangskennung (10') zu hinterlegen.

30. Mobilfunkkarte (1) nach Anspruch 27, **dadurch gekennzeichnet, dass** die Entsperrfunktion (9) eingerichtet ist, eine von dem Benutzer bereitgestellte neue Zugangskennung (10') zu hinterlegen.

31. Mobilfunkkarte (1) nach Anspruch 30, **dadurch gekennzeichnet, dass** die Entsperrfunktion (9) eingerichtet ist, ein den Benutzer zur Bereitstellung einer neuen Zugangskennung (10') aufforderndes Signal zu erzeugen und das Signal über die Schnittstelle (3) auszugeben.

32. Mobilfunkkarte (1) nach einem der Anspruche 23 bis 31, **dadurch gekennzeichnet, dass** die Entsperrfunktion (9) eingerichtet ist, einen Fehlbedienungszähler (11) der Mobilfunkkarte (1) zu initialisieren.

33. Mobilfunkkarte (1) nach einem der Anspruche 23 bis 32, **dadurch gekennzeichnet, dass** die Steuereinrichtung (7) einen Entsperrmodus (8) der Mobilfunkkarte (1) unterstützt, der funktionsfähig ist und die Aktivierung der Entsperrfunktion (9) über die Schnittstelle (3) zulässt, wenn die Mobilfunkkarte (1) mittels der Zugangskennung (10) gesperrt ist.

34. Mobilfunkkarte (1) nach Anspruch 33, **dadurch gekennzeichnet, dass** die Steuereinrichtung (7) eingerichtet ist, den Entsperrmodus (8) zu aktivieren, wenn die Mobilfunkkarte (1) mittels der Zugangskennung (10) gesperrt wird.

35. Serviceeinrichtung (20; 30) zum Entsperren einer mittels einer Zugangskennung (10) eines Mobilfunkkartenbenutzers gesperrten Mobilfunkkarte (1), umfassend
- eine Authentisierungseinrichtung (22; 32) zum Authentisieren des Mobilfunkkartenbenutzers;
- eine Kartenzugriffseinrichtung, die eingerichtet ist, auf die gesperrte Mobilfunkkarte (1) zuzugreifen; und
- eine Entsperreinrichtung (24; 34), die eingerichtet ist, über die Kartenzugriffseinrichtung einen Zugang für den Mobilfunkkartenbenutzer auf der Mobilfunkkarte (1) einzurichten,
- wobei die Serviceeinrichtung eingerichtet ist ein Verfahren gemäß den Ansprüchen 1 bis 22 auszuführen.

36. Serviceeinrichtung (20; 30) nach Anspruch 35, **dadurch gekennzeichnet, dass** die Authentisierungseinrichtung (22; 32) eingerichtet ist, Authentisierungsdaten (16; 16') des Benutzers, insbesondere persönliche Daten und/oder Kennwörter des Benutzers, mit hinterlegten Referenzdaten (21; 31) abzugleichen.

37. Serviceeinrichtung (20; 30) nach Anspruch 35 oder 36, **gekennzeichnet durch** eine Kommunikationseinrichtung (38), die eingerichtet ist, einen Datentransfer zwischen der Serviceeinrichtung (20; 30) und einem Kartenherausgeber und/oder Mobilfunknetzbetreiber durchzuführen.

38. Serviceeinrichtung (20; 30) nach Anspruch 37, **dadurch gekennzeichnet, dass**
- die Entsperreinrichtung (24; 34) eingerichtet ist, ein Berechtigungsanfragesignal hinsichtlich einer Zugriffsberechtigung des Mobilfunkkartenbenutzers auf die Mobilfunkkarte (1) zu erzeugen; und
- die Kommunikationseinrichtung eingerichtet ist, das Berechtigungsanfragesignal an den Kartenherausgeber und/oder Mobilfunknetzbetreiber zu übertragen und eine Antwort auf das Berechtigungsanfragesignal zu empfangen.

39. Serviceeinrichtung (20; 30) nach Anspruch 37, **dadurch gekennzeichnet, dass**
- die Entsperreinrichtung (24; 34) eingerichtet ist, ein Aufforderungssignal zur Einrichtung des Zugangs zu erzeugen; und
- die Kommunikationseinrichtung eingerichtet ist, das Aufforderungssignal an den Kartenherausgeber und/oder Mobilfunknetzbetreiber zu übertragen.

40. Serviceeinrichtung (20; 30) nach Anspruch 39, **gekennzeichnet durch** eine Luftschnittstelle (27; 37), die eingerichtet ist, eine Entsperranweisung (17) von dem Kartenherausgeber und/oder Mobilfunknetzbetreiber zu empfangen und an die Mobilfunkkarte (1) weiterzuleiten.

41. Serviceeinrichtung (20; 30) nach einem der Ansprüche 38 bis 40, **dadurch gekennzeichnet, dass**
- die Kartenzugriffseinrichtung eingerichtet ist, eine Kartenidentifikation aus der Mobilfunkkarte (1) auszulesen, und
- die Entsperreinrichtung (24; 34) eingerichtet ist, die Kartenidentifikation in das Berechtigungsanfragesignal gemäß Anspruch 39 oder das Aufforderungssignal gemäß Anspruch 40 zu integrieren.

42. Serviceeinrichtung (20; 30) nach einem der Ansprüche 38 bis 41, **dadurch gekennzeichnet, dass**
- die Kartenzugriffseinrichtung eingerichtet ist, die Zugangskennung (10) aus der Mobilfunkkarte (1) auszulesen; und
- die Entsperreinrichtung (24; 34) eingerichtet ist, ein die Zugangskennung (10) umfassendes Mitteilungssignal zu erzeugen und dem Mobilfunkkartenbenutzer über eine Benachrichtigungseinrichtung (25; 35) der Serviceeinrichtung (20; 30) zuzustellen.

43. Serviceeinrichtung (20; 30) nach einem der Ansprüche 39 bis 41, **dadurch gekennzeichnet, dass**
- die Kartenzugriffseinrichtung eingerichtet ist, die Zugangskennung (10) auf der Mobilfunkkarte (1) durch eine neue Zugangskennung (10') zu ersetzen; und
- die Entsperreinrichtung (24; 34) eingerichtet ist, ein die neue Zugangskennung (10') umfassendes Mitteilungssignal zu erzeugen und dem Mobilfunkkartenbenutzer über eine Benachrichtigungseinrichtung (25; 35) der Serviceeinrichtung (10; 30) zuzustellen.

44. Serviceeinrichtung (20; 30) nach Anspruch 43, **dadurch gekennzeichnet, dass** die Entsperreinrichtung (24; 34) eingerichtet ist, ein Aufforderungssignal zur Bereitstellung der neuen Zugangskennung (10') zu erzeugen und dem Mobilfunkkartenbenutzer über die Benachrichtigungseinrichtung (25; 35) der Serviceeinrichtung (20; 30) zuzustellen und die vom Benutzer bereitgestellte, neue Zugangskennung (10') über eine Eingabeeinrichtung (26; 36) der Serviceeinrichtung (20; 30) zu empfangen.

45. Serviceeinrichtung (20; 30) nach Anspruch 43, **dadurch gekennzeichnet, dass** die Kommunikationseinrichtung eingerichtet ist, die neue Zugangskennung (10') von dem Kartenherausgeber und/ oder Mobilfunknetzbetreiber zu empfangen.

46. Serviceeinrichtung (20; 30) nach Anspruch 43, **dadurch gekennzeichnet, dass** die Entsperreinrichtung (24; 34) eingerichtet ist, die neue Zugangskennung (10') zu generieren.

47. Serviceeinrichtung (20; 30) nach einem der Anspruche 42 bis 44, **dadurch gekennzeichnet, dass** die Benachrichtigungseinrichtung (25; 35) eine visuelle oder akustische Anzeige oder einen Drucker umfasst.

48. Serviceeinrichtung (20; 30) nach einem der Ansprüche 35 bis 47, **dadurch gekennzeichnet, dass** die Kartenzugriffseinrichtung eingerichtet ist, einen Fehlbedienungszahler (11) der Mobilfunkkarte (1) zu initialisieren.

## Claims

1. A method for unlocking a mobile communication card (1) locked by means of an access code (10) of a user, comprising the steps of
- accepting (S1) a contact made by a user of the mobile communication card (1) by a service device (20; 30); and
- authenticating (S2) the user to the service device (20; 30);
**characterized by** the further steps of
- automatically setting up (S3; S3a; S3b) an access for the user on the mobile communication card (1) upon prompting by the service device (20; 30),
- wherein the service device (20; 30) comprises a device operated by a third party independent of a card issuer and/or mobile communication network operator, rated as trustworthy by the card issuer and/or mobile communications network operator, said device effecting at least the step of authenticating (S2),
- wherein in the step of setting up (S3; S3a; S3b) the access, a new access code (10') is set up on the mobile communication card (1) by the service device (20; 30) and the user is notified of the new access code (10'),
- wherein in the step of setting up (S3; S3a; S3b) the new access code (10') is made available by the service device (20; 20'; 30).

2. The method according to claim 1, **characterized in that** the service device (20; 30) is operated by a card issuer of the mobile communication card (1) and/or a mobile communication network operator.

3. The method according to claim 1 or 2, **characterized in that** in the step of setting up (S3; S3a; S3b) the access, the card issuer of the mobile communication card (1) and/or the mobile communication operator sets up the access upon prompting by the third party.

4. The method according to claim 1 or 2, **characterized in that** in the step of setting up (S3; S3a; S3b) the access is set up by the third party via a card access device of the third party.

5. The method according to any of the claims 1 to 3, **characterized in that** by means of the locked mobile communication card (1) in an unlocking mode (8) at least the service device (20) can be contacted, wherein the step of accepting (S1) the contact takes place via a mobile communication connection between a mobile telecommunication terminal (12) in which the locked mobile communication card (1) is inserted and the service device (20) by means of the mobile communication card (1) in the unlocking mode (9).

6. The method according to any of the claims 1 to 3, **characterized in that** the step of accepting (S1) the contact takes place via a verbal communication connection between the user and the service device (20; 30).

7. The method according to claim 6, **characterized in that** the user visits the service device (20; 30) in person.

8. The method according to any of the claims 1 to 7, **characterized in that** in the step of authenticating (S2), authentication data (16; 16') of the user are compared to reference data (21; 31) at the disposal of the service device (20; 30), in particular personal data and/or passwords of the user.

9. The method according to claim 8, **characterized in that** the reference data (21; 31) are stored at a card issuer and/or mobile communication network operator upon purchasing the mobile communication card (1).

10. The method according to claim 8 with 1 or 2, **characterized in that** the reference data (31) are stored at the third party by the third party for the purpose of authentication.

11. The method according to claim 10, **characterized in that** in the step of authenticating (S2), a query made via the third party concerning the authorization of the user to access the mobile communication card (1) is checked by the card issuer and/or mobile communication network operator.

12. The method according to any of the claims 1 to 11, **characterized in that** in the step of setting up (S3; S3a; S3b), the access is set up via an interface (15; 27; 37), in particular an over-the-air interface, of a mobile telecommunication terminal (12) or a service device (20; 30), in which the mobile communication card (1) is inserted.

13. The method according to claim 11, **characterized in that** the step of setting up (S3; S3a; S3b) comprises the following steps of:
- sending an unlocking command (17) from the service device (20; 20') via the interface (15; 27; 37) to the mobile telecommunication terminal (12);
- activating an unlocking function (9) implemented on the mobile communication card (1) by the unlocking command (17); and
- setting up the access after activation of the unlocking function (9).

14. The method according to claim 13, **characterized in that** the access is set up automatically by the activated unlocking function (9).

15. The method according to any of the claims 12 to 14, **characterized in that** in the step of setting up (S3; S3a; S3b) the access, data are transmitted in an encrypted state via the interface (15; 27; 37).

16. The method according to any of the claims 1 to 15, **characterized in that** in the step of setting up (S3; S3a; S3b) the access, the existing access code (10) is notified to the user.

17. The method according to any of the claims 1 to 16, **characterized in that** in the step of setting up (S3; S3a; S3b) the new access code (10') is generated by the mobile communication card (1).

18. The method according to any of the claims 1 to 16, **characterized in that** in the step of setting up (S3; S3a; S3b) the access, the user is requested to specify the access code (10') to be set up.

19. The method according to claim 18, **characterized in that** the user stores the new access code (10') on the mobile communication card (1) via a card access device of a service device (20; 30) or a mobile telecommunication terminal (12) in which the mobile communication card (1) is inserted.

20. The method according to any of the claims 1 to 19, **characterized in that** in the step of setting up (S3; S3a; S3b) the access, an operation error counter (11) of the mobile communication card (1) is initialized.

21. The method according to any of the claims 1 to 18, **characterized in that** the method is effected when the mobile communication card (1) has been locked due to the repeated inputting of faulty access codes for the user.

22. The method according to any of the claims 1 to 21, **characterized in that** the method is effected in connection with a SIM card or USIM card as mobile communication card (1) and a PIN as access code (10) of the mobile communication card (1).

23. A mobile communication card (1) comprising a control device (7) with an unlocking function (9) for unlocking a mobile communication card (1) locked by means of an access code (10) of a user and an open interface (3) for external communication e.g. with a card access device of a service device (20; 30) or a mobile telecommunication terminal (12) communicating with the service device (30), **characterized in that** the unlocking function (9) is adapted to be activated via the interface (3) by means of an unlocking command, in order to set up an access for the user on the mobile communication card (1), when the mobile communication card (1) is locked by means of the access code (10),
wherein the mobile communication card (1) is adapted to execute a method according to the claims 1 to 22.

24. The mobile communication card (1) according to claim 23, **characterized in that** the mobile communication card (1) is adapted to be inserted in the card access device or the mobile telecommunication terminal (12).

25. The mobile communication card (1) according to claim 23 or 24, **characterized in that** the unlocking function (9) is adapted to be activated by means of an unlocking command transmitted to the mobile communication card (1) by the service device (20; 20'; 30).

26. The mobile communication card (1) according to any of the claims 23 to 25, **characterized in that** the unlocking function (9) is adapted to generate and output via the interface (3) a notification signal comprising the access code (10).

27. The mobile communication card (1) according to any of the claims claim 23 to 26, **characterized in that** the unlocking function (9) is adapted to store a new access code (10') on the mobile communication card (1).

28. The mobile communication card (1) according to claim 27, **characterized in that** the unlocking function (9) is adapted to generate the new access code (10').

29. The mobile communication card (1) according to claim 27, **characterized in that** the unlocking function (9) is adapted to store a new access code (10') contained in the unlocking command (17).

30. The mobile communication card (1) according to claim 27, **characterized in that** the unlocking function (9) is adapted to store a new access code (10') made available by the user.

31. The mobile communication card (1) according to claim 30, **characterized in that** the unlocking function (9) is adapted to generate a signal requesting the user to make available a new access code (10') and to output the signal via the interface (3).

32. The mobile communication card (1) according to any of the claims 23 to 31, **characterized in that** the unlocking function (9) is adapted to initialize an operation error counter (11) of the mobile communication card (1).

33. The mobile communication card (1) according to any of the claims 23 to 32, **characterized in that** the control device (7) supports an unlocking mode (8) of the mobile communication card (1) that is functional and permits the activation of the unlocking function (9) via the interface (3) when the mobile communication card (1) is locked by means of the access code (10).

34. The mobile communication card (1) according to claim 33, **characterized in that** the control device (7) is adapted to activate the unlocking mode (8) upon the locking of the mobile communication card (1) by means of the access code (10).

35. A service device (20; 30) for unlocking a mobile communication card (1) locked by means of an access code (10) of a mobile communication card user, comprising:
- an authentication device (22; 32) for authenticating the mobile communication card user;
- a card access device adapted to access the locked mobile communication card (1); and
- an unlocking device (24; 34) adapted to set up an access for the mobile communication card user on the mobile communication card (1) via the card access device,
- wherein the service device is adapted to execute a method according to the claims 1 to 22.

36. The service device (20; 30) according to claim 35, **characterized in that** the authentication device (22; 32) is adapted to compare authentication data (16; 16') of the user, in particular personal data and/or passwords of the user, to stored reference data (21; 31).

37. The service device (20; 30) according to claim 35 or 36, **characterized by** a communication device (38) adapted to effect a data transfer between the service device (20; 30) and a card issuer and/or mobile communication network operator.

38. The service device (20; 30) according to claim 37, **characterized in that**
- the unlocking device (24; 34) is adapted to generate an authorization query signal with regard to an access authorization of the mobile communication card user to the mobile communication card (1); and
- the communication device is adapted to transmit the authorization query signal to the card issuer and/or mobile communication network operator and to receive a response to the authorization query signal.

39. The service device (20; 30) according to claim 37, **characterized in that**
- the unlocking device (24; 34) is adapted to generate a request signal for setting up the access; and
- the communication device is adapted to transmit the request signal to the card issuer and/or mobile communication network operator.

40. The service device (20; 30) according to claim 39, **characterized by** an over-the-air interface (27; 37) adapted to receive and forward to the mobile communication card (1) an unlocking command (17) from the card issuer and/or mobile communication network operator.

41. The service device (20; 30) according to any of the claims 38 to 40, **characterized in that**
- the card access device is adapted to read out a card identification from the mobile communication card (1), and
- the unlocking device (24; 34) is adapted to integrate the card identification in the authorization query signal according to claim 39 or the request signal according to claim 40.

42. The service device (20; 30) according to any of the claims 38 to 41, **characterized in that**
- the card access device is adapted to read out the access code (10) from the mobile communication card (1); and
- the unlocking device (24; 34) is adapted to generate and send to the mobile communication card user a notification signal comprising the access code (10) via a notification device (25; 35) of the service device (20; 30).

43. The service device (20; 30) according to any of the claims 39 to 41, **characterized in that**
- the card access device is adapted to replace the access code (10) on the mobile communication card (1) by a new access code (10'); and
- the unlocking device (24; 34) is adapted to generate and send to the mobile communication card user a notification signal comprising the new access code (10') via a notification device (25; 35) of the service device (10; 30).

44. The service device (20; 30) according to claim 43, **characterized in that** the unlocking device (24; 34) is adapted to generate and send to the mobile communication card user a request signal for making available the new access code (10') via the notification device (25; 35) of the service device (20; 30) and to receive the new access code (10') made available by the user via an inputting device (26; 36) of the service device (20; 30).

45. The service device (20; 30) according to claim 43, **characterized in that** the communication device is adapted to receive the new access code (10') from the card issuer and/or mobile communication network operator.

46. The service device (20; 30) according to claim 43, **characterized in that** the unlocking device (24; 34) is adapted to generate the new access code (10').

47. The service device (20; 30) according to any of the claims 42 to 44, **characterized in that** the notification device (25; 35) comprises a visual or acoustic display or a printer.

48. The service device (20; 30) according to any of the claims 35 to 47, **characterized in that** the card access device is adapted to initialize an operation error counter (11) of the mobile communication card (1).

## Revendications

1. Procédé de déblocage d'une carte de téléphonie mobile (1) bloquée au moyen d'un identifiant d'accès (10) d'un utilisateur, comprenant les étapes de
- la réception (S1) d'une prise de contact d'un utilisateur de la carte de téléphonie mobile (1) par un dispositif de service (20; 30); et
- l'authentification (S2) de l'utilisateur vis-à-vis du dispositif de service (20; 30); **caractérisé par** les étapes supplémentaires de
- la configuration automatique (S3; S3a, S3b) d'un accès pour l'utilisateur sur la carte de téléphonie mobile (1) à l'instigation du dispositif de service (20; 30),
- cependant que le dispositif de service (20; 30) comprend un dispositif, lequel est exploité par un tiers indépendant d'un émetteur de carte et/ou d'un opérateur de réseau de radiocommunication mobile et jugé digne de confiance par l'émetteur de carte et/ou par l'opérateur de réseau de radiocommunication mobile, et lequel effectue au moins l'étape de l'authentification (S2),
- cependant que, lors de l'étape de la configuration (S3; S3a, S3b) de l'accès, un nouvel identifiant d'accès (10') est configuré par le dispositif de service (20; 30) sur la carte de téléphonie mobile (1) et le nouvel identifiant d'accès (10') est notifié à l'utilisateur,
- cependant que, lors de l'étape de la configuration (S3; S3a, S3b), le nouvel identifiant d'accès (10') est mis à disposition par le dispositif de service (20; 20'; 30).

2. Procédé selon la revendication 1, **caractérisé en ce que** le dispositif de service (20; 30) est exploité par un émetteur de carte de la carte de téléphonie mobile (1) et/ou par un opérateur de réseau de radiocommunication mobile.

3. Procédé selon la revendication 1 ou 2, **caractérisé en ce que**, lors de l'étape de la configuration (S3; S3a, S3b) de l'accès, l'émetteur de carte de la carte de téléphonie mobile (1) et/ou l'opérateur de radiocommunication mobile configure l'accès à l'instigation du tiers.

4. Procédé selon la revendication 1 ou 2, **caractérisé en ce que**, lors de l'étape de la configuration (S3; S3a, S3b), l'accès est configuré par le tiers par l'intermédiaire d'un dispositif d'accès à carte du tiers.

5. Procédé selon une des revendications de 1 à 3, **caractérisé en ce que**, au moyen de la carte de téléphonie mobile (1) bloquée, il est possible, dans un mode de déblocage (8), au moins de contacter le dispositif de service (20), l'étape de la réception (S1) de la prise de contact ayant lieu par l'intermédiaire d'une liaison de téléphonie mobile entre un terminal de télécommunication mobile (12) dans lequel la carte de téléphonie mobile (1) bloquée est utilisée et le dispositif de service (20) au moyen de la carte de téléphonie mobile (1) dans le mode de déblocage (9).

6. Procédé selon une des revendications de 1 à 3, **caractérisé en ce que** l'étape de la réception (S1) de la prise de contact a lieu par l'intermédiaire d'une liaison de communication orale entre l'utilisateur et le dispositif de service (20; 30).

7. Procédé selon la revendication 6, **caractérisé en ce que** l'utilisateur doit se rendre personnellement au dispositif de service (20; 30).

8. Procédé selon une des revendications de 1 à 7, **caractérisé en ce que**, lors de l'étape de l'authentification (S2), des données d'authentification (16; 16') de l'utilisateur sont comparées avec des données de référence (21; 31) dont dispose le dispositif de service (20; 30), en particulier des données personnelles et/ou des mots de passe de l'utilisateur.

9. Procédé selon la revendication 8, **caractérisé en ce que** les données de référence (21; 31) sont, lors de l'acquisition de la carte de téléphonie mobile (1), déposées chez un émetteur de carte et/ou chez un opérateur de réseau de radiocommunication mobile.

10. Procédé selon la revendication 8 avec 1 ou 2, **caractérisé en ce que** les données de référence (31) sont déposées chez le tiers aux fins de l'authentification par le tiers.

11. Procédé selon la revendication 10, **caractérisé en ce que**, lors de l'étape de l'authentification (S2), une demande concernant l'autorisation de l'utilisateur à l'accès à la carte de téléphonie mobile (1) ayant eu lieu par l'intermédiaire du tiers est examinée par l'émetteur de carte et/ou l'opérateur de réseau de radiocommunication mobile.

12. Procédé selon une des revendications de 1 à 11, **caractérisé en ce que**, lors de l'étape de la configuration (S3; S3a, S3b), l'accès est configuré par l'intermédiaire d'une interface (15; 27; 37), en particulier interface radio, d'un terminal de télécommunication mobile (12) ou d'un dispositif de service (20; 30) dans lequel la carte de téléphonie mobile (1) est utilisée.

13. Procédé selon la revendication 11, **caractérisé en ce que** l'étape de la configuration (S3; S3a, S3b) comprend les étapes suivantes:
- envoi d'une instruction de déblocage (17) du dispositif de service (20; 20') au terminal de télécommunication mobile (12) par l'intermédiaire d'une interface (15; 27; 37);
- activation, par l'instruction de déblocage (17), d'une fonction de déblocage (9) implémentée sur la carte de téléphonie mobile (1); et
- configuration de l'accès après activation de la fonction de déblocage (9).

14. Procédé selon la revendication 13, **caractérisé en ce que** l'accès est configuré automatiquement par la fonction de déblocage (9) activée.

15. Procédé selon une des revendications de 12 à 14, **caractérisé en ce que**, lors de l'étape de la configuration (S3; S3a, S3b) de l'accès par l'intermédiaire de l'interface (15; 27; 37), des données sont transmises sous forme cryptée.

16. Procédé selon une des revendications de 1 à 15, **caractérisé en ce que**, lors de l'étape de la configuration (S3; S3a, S3b) de l'accès, l'identifiant d'accès (10) existant est notifié à l'utilisateur.

17. Procédé selon une des revendications de 1 à 16, **caractérisé en ce que**, lors de l'étape de la configuration (S3; S3a, S3b), le nouvel identifiant d'accès (10') est généré par la carte de téléphonie mobile (1).

18. Procédé selon une des revendications de 1 à 16, **caractérisé en ce que**, lors de l'étape de la configuration (S3; S3a, S3b) de l'accès, l'utilisateur est invité à indiquer l'identifiant d'accès (10') à configurer.

19. Procédé selon la revendication 18, **caractérisé en ce que** l'utilisateur dépose le nouvel identifiant d'accès (10') sur la carte de téléphonie mobile (1) par l'intermédiaire d'un dispositif d'accès à carte d'un dispositif de service (20; 30) ou d'un terminal de télécommunication mobile (12) dans lequel la carte de téléphonie mobile (1) est utilisée.

20. Procédé selon une des revendications de 1 à 19, **caractérisé en ce que**, lors de l'étape de la configuration (S3; S3a, S3b) de l'accès, un compteur de fausses manoeuvres (11) de la carte de téléphonie mobile (1) est initialisé.

21. Procédé selon une des revendications de 1 à 18, **caractérisé en ce que** le procédé est effectué quand la carte de téléphonie mobile (1) a été bloquée pour l'utilisateur en raison d'entrées réitérées d'identifiants d'accès erronés.

22. Procédé selon une des revendications de 1 à 21, **caractérisé en ce que** le procédé est effectué en relation avec une carte SIM ou carte USIM en tant que carte de téléphonie mobile (1) et avec un code PIN en tant qu'identifiant d'accès (10) de la carte de téléphonie mobile (1).

23. Carte de téléphonie mobile (1) comprenant un dispositif de commande (7) ayant une fonction de déblocage (9) pour le déblocage d'une carte de téléphonie mobile (1) bloquée au moyen d'un identifiant d'accès (10) d'un utilisateur et une interface ouverte (3) pour la communication externe p.ex. avec un dispositif d'accès à carte d'un dispositif de service (20; 30) ou avec un terminal de télécommunication mobile (12) communiquant avec le dispositif de service (30), **caractérisée en ce que** la fonction de déblocage (9) est configurée pour être activée par l'intermédiaire de l'interface (3) au moyen d'une instruction de déblocage afin de configurer un accès pour l'utilisateur sur la carte de téléphonie mobile (1) quand la carte de téléphonie mobile (1) est bloquée au moyen de l'identifiant d'accès (10),
la carte de téléphonie mobile (1) étant configurée pour exécuter un procédé selon les revendications de 1 à 22.

24. Carte de téléphonie mobile (1) selon la revendication 23, **caractérisée en ce que** la carte de téléphonie mobile (1) est configurée pour être utilisée dans le dispositif d'accès à carte ou dans le terminal de télécommunication mobile (12).

25. Carte de téléphonie mobile (1) selon la revendication 23 ou 24, **caractérisée en ce que** la fonction de déblocage (9) est configurée pour être activée au moyen d'une instruction de déblocage transmise du dispositif de service (20; 20'; 30) à la carte de téléphonie mobile (1).

26. Carte de téléphonie mobile (1) selon une des revendications de 23 à 25, **caractérisée en ce que** la fonction de déblocage (9) est configurée pour générer un signal de notification comprenant l'identifiant d'accès (10) et délivrer en sortie ce signal par l'intermédiaire de l'interface (3).

27. Carte de téléphonie mobile (1) selon une des revendications de 23 à 26, **caractérisée en ce que** la fonction de déblocage (9) est configurée pour déposer un nouvel identifiant d'accès (10') sur la carte de téléphonie mobile (1).

28. Carte de téléphonie mobile (1) selon la revendication 27, **caractérisée en ce que** la fonction de déblocage (9) est configurée pour générer le nouvel identifiant d'accès (10').

29. Carte de téléphonie mobile (1) selon la revendication 27, **caractérisée en ce que** la fonction de déblocage (9) est configurée pour déposer un nouvel identifiant d'accès (10') contenu dans l'instruction de déblocage (17).

30. Carte de téléphonie mobile (1) selon la revendication 27, **caractérisée en ce que** la fonction de déblocage (9) est configurée pour déposer un nouvel identifiant d'accès (10') mis à disposition par l'utilisateur.

31. Carte de téléphonie mobile (1) selon la revendication 30, **caractérisée en ce que** la fonction de déblocage (9) est configurée pour générer un signal invitant l'utilisateur à mettre à disposition un nouvel identifiant d'accès (10') et pour délivrer en sortie le signal par l'intermédiaire de l'interface (3).

32. Carte de téléphonie mobile (1) selon une des revendications de 23 à 31, **caractérisée en ce que** la fonction de déblocage (9) est configurée pour initialiser un compteur de fausses manoeuvres (11) de la carte de téléphonie mobile (1).

33. Carte de téléphonie mobile (1) selon une des revendications de 23 à 32, **caractérisée en ce que** le dispositif de commande (7) assiste un mode de déblocage (8) de la carte de téléphonie mobile (1) qui est apte à fonctionner et permet l'activation de la fonction de déblocage (9) par l'intermédiaire de l'interface (3) quand la carte de téléphonie mobile (1) est bloquée au moyen de l'identifiant d'accès (10).

34. Carte de téléphonie mobile (1) selon la revendication 33, **caractérisée en ce que** le dispositif de commande (7) est configuré pour activer le mode de déblocage (8) quand la carte de téléphonie mobile (1) est bloquée au moyen de l'identifiant d'accès (10).

35. Dispositif de service (20; 30) destiné au déblocage d'une carte de téléphonie mobile (1) bloquée au moyen d'un identifiant d'accès (10) d'un utilisateur de carte de téléphonie mobile, comprenant
- un dispositif d'authentification (22; 32) destiné à authentification de l'utilisateur de carte de téléphonie mobile;
- un dispositif d'accès à carte configuré pour accéder à la carte de téléphonie mobile (1) bloquée; et
- un dispositif de déblocage (24; 34) configuré pour, par l'intermédiaire du dispositif d'accès à carte, configurer un accès pour l'utilisateur de carte de téléphonie mobile à la carte de téléphonie mobile (1),
- le dispositif de service étant configuré pour exécuter un procédé selon les revendications de 1 à 22.

36. Dispositif de service (20; 30) selon la revendication 35, **caractérisé en ce que** le dispositif d'authentification (22; 32) est configuré pour comparer des données d'authentification (16; 16') de l'utilisateur, , en particulier des données personnelles et/ou des mots de passe de l'utilisateur, avec des données de référence (21; 31) déposées.

37. Dispositif de service (20; 30) selon la revendication 35 ou 36, **caractérisé par** un dispositif de communication (38) configuré pour effectuer un transfert de données entre le dispositif de service (20; 30) et un émetteur de carte et/ou un opérateur de réseau de radiocommunication mobile.

38. Dispositif de service (20; 30) selon la revendication 37, **caractérisé en ce que**
- le dispositif de déblocage (24; 34) est configuré pour générer un signal de demande relative à l'autorisation concernant une autorisation de l'utilisateur de carte de téléphonie mobile à accéder à la carte de téléphonie mobile (1); et
- le dispositif de communication est configuré pour transmettre le signal de demande relative à l'autorisation à l'émetteur de carte et/ou opérateur de réseau de radiocommunication mobile et recevoir une réponse au signal de demande relative à l'autorisation.

39. Dispositif de service (20; 30) selon la revendication 37, **caractérisé en ce que**
- le dispositif de déblocage (24; 34) est configuré pour générer un signal d'invitation à configurer l'accès; et
- le dispositif de communication est configuré pour transmettre le signal d'invitation à l'émetteur de carte et/ou l'opérateur de réseau de radiocommunication mobile.

40. Dispositif de service (20; 30) selon la revendication 39, **caractérisé par** une interface radio (27; 37) configurée pour recevoir une instruction de déblocage (17) de la part de l'émetteur de carte et/ou de l'opérateur de réseau de radiocommunication mobile et la transférer à la carte de téléphonie mobile (1).

41. Dispositif de service (20; 30) selon une des revendications de 38 à 40, **caractérisé en ce que**
- le dispositif d'accès à carte est configuré pour lire une identification de carte depuis la carte de téléphonie mobile (1), et
- le dispositif de déblocage (24; 34) est configuré pour intégrer l'identification de carte dans le signal de demande relative à l'autorisation selon la revendication 39 ou le signal d'invitation selon la revendication 40.

42. Dispositif de service (20; 30) selon une des revendications de 38 à 41, **caractérisé en ce que**
- le dispositif d'accès à carte est configuré pour lire l'identifiant d'accès (10) depuis la carte de téléphonie mobile (1); et
- le dispositif de déblocage (24; 34) est configuré pour générer un signal de notification comprenant l'identifiant d'accès (10) et livrer ce signal à l'utilisateur de carte de téléphonie mobile par l'intermédiaire d'un dispositif d'information (25; 35) du dispositif de service (20; 30).

43. Dispositif de service (20; 30) selon une des revendications de 39 à 41, **caractérisé en ce que**
- le dispositif d'accès à carte est configuré pour remplacer l'identifiant d'accès (10) sur la carte de téléphonie mobile (1) par un nouvel identifiant d'accès (10'); et
- le dispositif de déblocage (24; 34) est configuré pour générer un signal de notification comprenant le nouvel identifiant d'accès (10') et livrer ce signal à l'utilisateur de carte de téléphonie mobile par l'intermédiaire d'un dispositif d'information (25; 35) du dispositif de service (10; 30).

44. Dispositif de service (20; 30) selon la revendication 43, **caractérisé en ce que** le dispositif de déblocage (24; 34) est configuré pour générer un signal d'invitation à la mise à disposition du nouvel identifiant d'accès (10') et livrer ce signal à l'utilisateur de carte de téléphonie mobile par l'intermédiaire d'un dispositif d'information (25; 35) du dispositif de service (20; 30) et pour recevoir par l'intermédiaire d'un dispositif d'entrée (26; 36) du dispositif de service (20; 30) le nouvel identifiant d'accès (10').

45. Dispositif de service (20; 30) selon la revendication 43, **caractérisé en ce que** le dispositif de communication est configuré pour recevoir le nouvel identifiant d'accès (10') de la part de l'émetteur de carte et/ou de l'opérateur de réseau de radiocommunication mobile.

46. Dispositif de service (20; 30) selon la revendication 43, **caractérisé en ce que** le dispositif de déblocage (24; 34) est configuré pour générer le nouvel identifiant d'accès (10').

47. Dispositif de service (20; 30) selon une des revendications de 42 à 44, **caractérisé en ce que** le dispositif d'information (25; 35) comprend un affichage visuel ou acoustique ou une imprimante.

48. Dispositif de service (20; 30) selon une des revendications de 35 à 47, **caractérisé en ce que** le dispositif d'accès à carte est configuré pour initialiser un compteur de fausses manoeuvres (11) de la carte de téléphonie mobile (1).
